# EUROPEAN PATENT APPLICATION

(11) **EP 4 847 739 A1**
(43) Date of publication of application: **02.12.2026**
(21) Application number: 26182331.4
(22) Date of filing: 01.06.2026
(51) Int. Cl.: E21B 43/12, G01V 20/00, G16H 10/00

(54) **RESERVOIR SIMULATOR INITIALIZATION FRAMEWORK**

(30) Priority: 30.05.2025 US 202563814742 P
(71) Applicant: Services Pétroliers Schlumberger, 75007 Paris (FR); GeoQuest Systems B.V., 2514 JG The Hague (NL)
(72) Inventor: PRAYOGA, Advarel, Abingdon, OX14 4RU (GB); AHMED, Mohamed Osman Mahgoub, 21 Abu Dhabi (AE)
(74) Representative: Schlumberger Intellectual Property Department

(57) **Abstract**

A method can include receiving input for a reservoir simulation to be performed by a reservoir simulator that solves a system of equations using a discretized grid space and an iterative solver; responsive to receipt of the input, using generative artificial intelligence, generating relevant data using data from one or more data sources that include different types of data; using one or more machine learning models and at least a portion of the relevant data, estimating initial values for parameters of the reservoir simulation for an initial time; and executing the reservoir simulator to generate reservoir simulation results for a time beyond the initial time.

## Description

### RELATED APPLICATION

This application claims priority to and the benefit of a U.S. Provisional Application having Serial No. 63/814,742, filed 30 May 2025, which is incorporated by reference herein in its entirety.

### BACKGROUND

A reservoir can be a subsurface formation that can be characterized at least in part by its porosity and fluid permeability. As an example, a reservoir may be part of a basin such as a sedimentary basin. A basin can be a depression (e.g., caused by plate tectonic activity, subsidence, etc.) in which sediments accumulate. As an example, where hydrocarbon source rocks occur in combination with appropriate depth and duration of burial, a petroleum system may develop within a basin, which may form a reservoir that includes hydrocarbon fluids (e.g., oil, gas, etc.).

Oilfield exploration and production efforts generally include acquiring data that represent a subsurface volume of interest, and then modeling the physical characteristics of the subsurface volume based on the data. There are many sources for such data, including seismic surveys and well logs. These data permit complex models to be built, which may depict the geology of the subsurface volume, fluid migration over time in the volumes, and other aspects.

At the production stage, fluid production system operations may be monitored and controlled. A fluid production system can include various types of equipment including equipment that forms a network for fluid communication between wells and processing facilities. In various instances, control may aim to stabilize operations in the face of numerous variables (e.g., variables in reservoir-to-well flow, environmental conditions, equipment operations, physical and/or chemical process, etc.). Control may involve adjusting valves, pumping, compressing, separating, distilling, etc., where various production monitoring points may be equipped with sensors (e.g., pressure sensors, temperature sensors, flow meters, etc.) that acquire data. Well produced reservoir fluid may be considered to be a resource that may be processed to form various products where fluid composition, fluid volume, etc., may be assessed throughout a fluid production system to help assure product quality and quantity.

To assess a field, develop a field, control equipment in a field, control production of fluid, control injection of fluid, etc., simulations may be performed. For example, a reservoir simulator may be utilized to generate simulation results that may be utilized for one or more purposes. For example, consider well placement, well trajectory, surface network control, enhanced recovery schemes, history matching (e.g., of production to model), etc. A reservoir simulation that marches forward in time can demand specifying initial values for various parameters, which can be challenging and time consuming. Further, such values can dictate reservoir simulator performance, for example, consider stability, number of iterations, time to converge to a solution, accuracy, etc. As an example, a reservoir simulator initialization framework may provide for improved initialization and reservoir simulator performance.

### SUMMARY

A method can include receiving input for a reservoir simulation to be performed by a reservoir simulator that solves a system of equations using a discretized grid space and an iterative solver; responsive to receipt of the input, using generative artificial intelligence, generating relevant data using data from one or more data sources that include different types of data; using one or more machine learning models and at least a portion of the relevant data, estimating initial values for parameters of the reservoir simulation for an initial time; and executing the reservoir simulator to generate reservoir simulation results for a time beyond the initial time.

A system can include a processor; a memory accessible to the processor; processor-executable instructions stored in the memory and executable by the processor to instruct the system to: receive input for a reservoir simulation to be performed by a reservoir simulator that solves a system of equations using a discretized grid space and an iterative solver; responsive to receipt of the input, using generative artificial intelligence, generate relevant data using data from one or more data sources that include different types of data; using one or more machine learning models and at least a portion of the relevant data, estimate initial values for parameters of the reservoir simulation for an initial time; and execute the reservoir simulator to generate reservoir simulation results for a time beyond the initial time.

One or more computer-readable media can include computer-executable instructions executable by a system to instruct the system to: receive input for a reservoir simulation to be performed by a reservoir simulator that solves a system of equations using a discretized grid space and an iterative solver; responsive to receipt of the input, using generative artificial intelligence, generate relevant data using data from one or more data sources that include different types of data; using one or more machine learning models and at least a portion of the relevant data, estimate initial values for parameters of the reservoir simulation for an initial time; and execute the reservoir simulator to generate reservoir simulation results for a time beyond the initial time.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

Features and advantages of the described implementations can be more readily understood by reference to the following description taken in conjunction with the accompanying drawings.
**FIG. 1** illustrates an example system that includes various framework components associated with one or more geologic environments;
**FIG. 2** illustrates examples of systems;
**FIG.** 3 illustrates an example of a system;
**FIG. 4** illustrates an example of a method;
**FIG.** 5 illustrates an example of a method;
**FIG. 6** illustrates an example of a flowchart;
**FIG.** 7 illustrates examples of plots;
**FIG. 8** illustrates examples of plots;
**FIG. 9** illustrates an example of a system;
**FIG. 10** illustrates an example of a workflow;
**FIG. 11** illustrates an example of a workflow;
**FIG. 12** illustrates an example of a graphical user interface;
**FIG. 13** illustrates an example of a workflow;
**FIG. 14** illustrates an example of a method and an example of a system; and
**FIG. 15** illustrates examples of computer and network equipment.

### DETAILED DESCRIPTION

This description is not to be taken in a limiting sense, but rather is made merely for the purpose of describing the general principles of the implementations. The scope of the described implementations should be ascertained with reference to the issued claims.

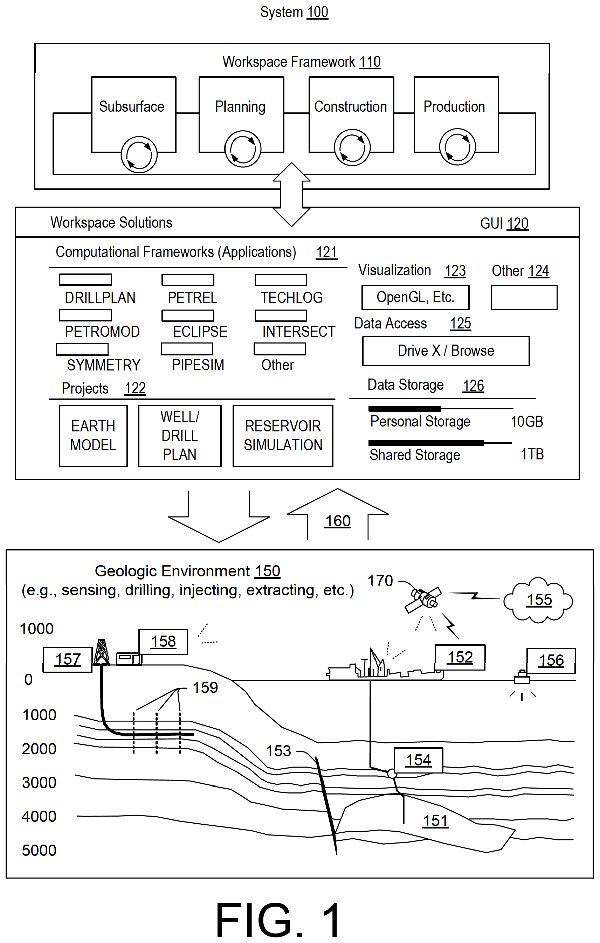

**FIG. 1** shows an example of a system 100 that includes a workspace framework 110 that can provide for instantiation of, rendering of, interactions with, etc., a graphical user interface (GUI) 120. In the example of **FIG. 1****,** the GUI 120 can include graphical controls for computational frameworks (e.g., applications) 121, projects 122, visualization 123, one or more other features 124, data access 125, and data storage 126.

In the example of **FIG. 1****,** the workspace framework 110 may be tailored to a particular geologic environment such as an example geologic environment 150. For example, the geologic environment 150 may include layers (e.g., stratification) that include a reservoir 151 and that may be intersected by a fault 153. As an example, the geologic environment 150 may be outfitted with a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a wellsite and include sensing, detecting, emitting or other circuitry. Such equipment may include storage and communication circuitry to store and to communicate data, instructions, etc. As an example, one or more satellites may be provided for purposes of communications, data acquisition, etc. For example, **FIG. 1** shows a satellite 170 in communication with the network 155 that may be configured for communications, noting that the satellite 170 may additionally or alternatively include circuitry for imagery (e.g., spatial, spectral, temporal, radiometric, etc.).

**FIG. 1** also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

In the example of **FIG.** 1, the GUI 120 shows some examples of computational frameworks, including the DRILLPLAN, PETREL, TECHLOG, PETROMOD, ECLIPSE, INTERSECT, SYMMETRY, and PIPESIM frameworks, SLB, Houston, Texas).

The DRILLPLAN framework provides for digital well construction planning and includes features for automation of repetitive tasks and validation workflows, enabling improved quality drilling programs (e.g., digital drilling plans, etc.) to be produced quickly with assured coherency.

The DRILLOPS framework (SLB, Houston, Texas) may execute a digital drilling plan and ensure plan adherence, while delivering goal-based automation. The DRILLOPS framework may generate activity plans automatically individual operations, whether they are monitored and/or controlled on the rig or in town. Automation may utilize data analysis and learning systems to assist and optimize tasks, such as, for example, setting ROP to drilling a stand. The DRILLOPS framework may provide for various levels of automation based on planning and/or re-planning (e.g., via the DRILLPLAN framework), feedback, etc.

The PETREL framework can be part of the DELFI cognitive E&P environment (SLB, Houston, Texas) for utilization in geosciences and geoengineering, for example, to analyze subsurface data from exploration to production of fluid from a reservoir. The PETREL framework provides components that allow for optimization of exploration and development operations. The PETREL framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes (e.g., with respect to one or more geologic environments, etc.). Such a framework may be considered an application (e.g., executable using one or more devices) and may be considered a data-driven application (e.g., where data is input for purposes of modeling, simulating, etc.).

The TECHLOG framework can handle and process field and laboratory data for a variety of geologic environments (e.g., deepwater exploration, shale, etc.). The TECHLOG framework can structure wellbore data for analyses, planning, etc.

The PETROMOD framework provides petroleum systems modeling capabilities that can combine one or more of seismic, well, and geological information to model the evolution of a sedimentary basin. The PETROMOD framework can predict if, and how, a reservoir has been charged with hydrocarbons, including the source and timing of hydrocarbon generation, migration routes, quantities, and hydrocarbon type in the subsurface or at surface conditions.

The ECLIPSE framework provides a reservoir simulator (e.g., as a computational framework) with numerical solutions for fast and accurate prediction of dynamic behavior for various types of reservoirs and development schemes.

The INTERSECT framework provides a high-resolution reservoir simulator for simulation of detailed geological features and quantification of uncertainties, for example, by creating accurate production scenarios and, with the integration of precise models of the surface facilities and field operations, the INTERSECT framework can produce reliable results, which may be continuously updated by real-time data exchanges (e.g., from one or more types of data acquisition equipment in the field that can acquire data during one or more types of field operations, etc.). The INTERSECT framework can provide completion configurations for complex wells where such configurations can be built in the field, can provide detailed chemical-enhanced-oil-recovery (EOR) formulations where such formulations can be implemented in the field, can analyze application of steam injection and other thermal EOR techniques for implementation in the field, advanced production controls in terms of reservoir coupling and flexible field management, and flexibility to script customized solutions for improved modeling and field management control. The INTERSECT framework, as with the other example frameworks, may be utilized as part of the DELFI cognitive E&P environment, for example, for rapid simulation of multiple concurrent cases. For example, a workflow may utilize one or more of the DELFI on demand reservoir simulation features.

The SYMMETRY framework provides for modeling process workflows, including integrating facilities, process units with pipelines, networks and flare, safety systems models, while ensuring consistent thermodynamics and fluid characterization across a system. The SYMMETRY framework includes components for optimizing processes in upstream, midstream and downstream sectors, maximizing profits and minimizing CAPEX. The SYMMETRY framework provides for oil pseudo-component characterization techniques. For example, a paraffin, isoparaffin, olefin, naphthene, aromatic (PIONA) based fluid characterization uses chemical family structures to enable accurate physical property estimation in one or more of blending, separation, and reactive systems to be more accurately simulated. Such an approach helps to ensure consistent thermodynamics and component tracking across a system. The SYMMETRY framework provides a simulation engine for performing various simulations of physical phenomena. Various frameworks can share compositional data, for example, consider sharing of data between the PIPESIM framework steady-state multiphase flow simulator and the SYMMETRY process framework. Compositional models can be integrated to evaluate and maintain fluid description fidelity and behavior, which can extend beyond capabilities of black-oil simulations. The SYMMETRY framework includes components that provide for assessments that align with the United Nations Sustainable Development Goals 12 and 13, that can optimize drilling CO2 footprint, and that can provide for emissions reductions.

The PIPESIM simulator includes solvers that may provide simulation results such as, for example, multiphase flow results (e.g., from a reservoir to a wellhead and beyond, etc.), flowline and surface facility performance, etc. The PIPESIM simulator may be integrated, for example, with the AVOCET production operations framework (SLB, Houston Texas). As an example, a reservoir or reservoirs may be simulated with respect to one or more enhanced recovery techniques (e.g., consider a thermal process such as steam-assisted gravity drainage (SAGD), etc.). As an example, the PIPESIM simulator may be an optimizer that can optimize one or more operational scenarios at least in part via simulation of physical phenomena.

The aforementioned DELFI environment provides various features for workflows as to subsurface analysis, planning, construction and production, for example, as illustrated in the workspace framework 110. Such an environment may be referred to as a process operations environment that can include a variety of frameworks (e.g., applications, etc.). As shown in **FIG.** 1, outputs from the workspace framework 110 can be utilized for directing, controlling, etc., one or more processes in the geologic environment 150 and, feedback 160, can be received via one or more interfaces in one or more forms (e.g., acquired data as to operational conditions, equipment conditions, environment conditions, etc.).

As an example, a platform, such as, for example, the LUMI platform (SLB, Houston, Texas) may be utilized. The LUMI platform includes features that provide for artificial intelligence solutions as may be integrated with data management capabilities. The LUMI platform provides for flexible deployment options and an open, secure, and modular architecture, for example, to empower data-driven decision-making. The LUMI platform is operable with the DELFI environment and, hence, one or more of various frameworks. While various platforms, environments, frameworks, libraries, etc., are mentioned, a framework may be operable in an agnostic manner, for example, to be compatible with one or more other platforms, environments, frameworks, libraries, technologies, etc.

In the example of **FIG. 1****,** the visualization features 123 may be implemented via the workspace framework 110, for example, to perform tasks as associated with one or more of subsurface regions, planning operations, constructing wells and/or surface fluid networks, and producing from a reservoir.

As an example, a visualization process can implement one or more of various features that can be suitable for one or more web applications. For example, a template may involve use of the JAVASCRIPT object notation format (JSON) and/or one or more other languages/formats. As an example, a framework may include one or more converters. For example, consider a JSON to PYTHON converter and/or a PYTHON to JSON converter. Such an approach can provide for compatibility of devices, frameworks, etc., with respect to one or more sets of instructions.

As an example, visualization features can provide for visualization of various earth models, properties, etc., in one or more dimensions. As an example, visualization features can provide for rendering of information in multiple dimensions, which may optionally include multiple resolution rendering. In such an example, information being rendered may be associated with one or more frameworks and/or one or more data stores. As an example, visualization features may include one or more control features for control of equipment, which can include, for example, field equipment that can perform one or more field operations. As an example, a workflow may utilize one or more frameworks to generate information that can be utilized to control one or more types of field equipment (e.g., drilling equipment, wireline equipment, fracturing equipment, etc.).

As to a reservoir model that may be suitable for utilization by a simulator, consider acquisition of seismic data as acquired via reflection seismology, which finds use in geophysics, for example, to estimate properties of subsurface formations. As an example, reflection seismology may provide seismic data representing waves of elastic energy (e.g., as transmitted by P-waves and S-waves, in a frequency range of approximately 1 Hz to approximately 100 Hz). Seismic data may be processed and interpreted, for example, to understand better composition, fluid content, extent and geometry of subsurface rocks. Such interpretation results can be utilized to plan, simulate, perform, etc., one or more operations for production of fluid from a reservoir (e.g., reservoir rock, etc.).

Field acquisition equipment may be utilized to acquire seismic data, which may be in the form of traces where a trace can include values organized with respect to time and/or depth (e.g., consider 1D, 2D, 3D or 4D seismic data). For example, consider acquisition equipment that acquires digital samples at a rate of one sample per approximately 4 ms. Given a speed of sound in a medium or media, a sample rate may be converted to an approximate distance. For example, the speed of sound in rock may be on the order of around 5 km per second. Thus, a sample time spacing of approximately 4 ms would correspond to a sample "depth" spacing of about 10 meters (e.g., assuming a path length from source to boundary and boundary to sensor). As an example, a trace may be about 4 seconds in duration; thus, for a sampling rate of one sample at about 4 ms intervals, such a trace would include about 1000 samples where latter acquired samples correspond to deeper reflection boundaries. If the 4 second trace duration of the foregoing example is divided by two (e.g., to account for reflection), for a vertically aligned source and sensor, a deepest boundary depth may be estimated to be about 10 km (e.g., assuming a speed of sound of about 5 km per second).

As an example, a model may be a simulated version of a geologic environment. As an example, a simulator may include features for simulating physical phenomena in a geologic environment based at least in part on a model or models. A simulator, such as a reservoir simulator, can simulate fluid flow in a geologic environment based at least in part on a model that can be generated via a framework that receives seismic data. A simulator can be a computerized system (e.g., a computing system) that can execute instructions using one or more processors to solve a system of equations that describe physical phenomena subject to various constraints. In such an example, the system of equations may be spatially defined (e.g., numerically discretized) according to a spatial model that that includes layers of rock, geobodies, etc., that have corresponding positions that can be based on interpretation of seismic and/or other data. A spatial model may be a cell-based model where cells are defined by a grid (e.g., a mesh). A cell in a cell-based model can represent a physical area or volume in a geologic environment where the cell can be assigned physical properties (e.g., permeability, fluid properties, etc.) that may be germane to one or more physical phenomena (e.g., fluid volume, fluid flow, pressure, etc.). A reservoir simulation model can be a spatial model that may be cell-based.

A simulator can be utilized to simulate the exploitation of a real reservoir, for example, to examine different productions scenarios to find an optimal one before production or further production occurs. A reservoir simulator does not provide an exact replica of flow in and production from a reservoir at least in part because the description of the reservoir and the boundary conditions for the equations for flow in a porous rock are generally known with an amount of uncertainty. Certain types of physical phenomena occur at a spatial scale that can be relatively small compared to size of a field. A balance can be struck between model scale and computational resources that results in model cell sizes being of the order of meters; rather than a lesser size (e.g., a level of detail of pores). A modeling and simulation workflow for multiphase flow in porous media (e.g., reservoir rock, etc.) can include generalizing real micro-scale data from macro scale observations (e.g., seismic data and well data) and upscaling to a manageable scale and problem size. Uncertainties can exist in input data and solution procedure such that simulation results too are to some extent uncertain. A process known as history matching can involve comparing simulation results to actual field data acquired during production of fluid from a field. Information gleaned from history matching, can provide for adjustments to a model, data, etc., which can help to increase accuracy of simulation.

As an example, a simulator may utilize various types of constructs, which may be referred to as entities. Entities may include earth entities or geological objects such as wells, surfaces, reservoirs, etc. Entities can include virtual representations of actual physical entities that may be reconstructed for purposes of simulation. Entities may include entities based on data acquired via sensing, observation, etc. (e.g., consider entities based at least in part on seismic data and/or other information). As an example, an entity may be characterized by one or more properties (e.g., a geometrical pillar grid entity of an earth model may be characterized by a porosity property, etc.). Such properties may represent one or more measurements (e.g., acquired data), calculations, etc.

As an example, a simulator may utilize an object-based software framework, which may include entities based on pre-defined classes to facilitate modeling and simulation. As an example, an object class can encapsulate reusable code and associated data structures. Object classes can be used to instantiate object instances for use by a program, script, etc. For example, borehole classes may define objects for representing boreholes based on well data. A model of a basin, a reservoir, etc. may include one or more boreholes where a borehole may be, for example, for measurements, injection, production, etc. As an example, a borehole may be a wellbore of a well, which may be a completed well (e.g., for production of a resource from a reservoir, for injection of material, etc.).

While several simulators are illustrated in the example of **FIG.** 1, one or more other simulators may be utilized, additionally or alternatively. For example, consider the VISAGE geomechanics simulator (SLB, Houston Texas), etc. As an example, the KINETIX framework (SLB Houston, Texas) may be utilized for reservoir-centric stimulation-to-production workflows that may integrate geology, petrophysics, completion engineering, reservoir engineering, and geomechanics to assist in optimization of completion and fracturing designs for a well, a pad, or a field, etc. From 1D logs and simple geometric completions to full 3D mechanical and petrophysical models coupled with the INTERSECT simulator and the VISAGE geomechanics simulator, the KINETIX framework provides various options, including automated parallel processing (e.g., consider cloud platform computing, etc.).

As mentioned, a framework may be implemented within or in a manner operatively coupled to the LUMI platform, the DELFI environment, etc., which may include features for a secure, cognitive, cloud-based collaborative environment that integrates data and workflows with digital technologies, such as artificial intelligence and machine learning. As an example, such an environment can provide for operations that involve one or more frameworks.

As an example, data can include geochemical data. For example, consider data acquired using X-ray fluorescence (XRF) technology, Fourier transform infrared spectroscopy (FTIR) technology and/or wireline geochemical technology.

As an example, one or more probes may be deployed in a bore via a wireline or wirelines. As an example, a probe may emit energy and receive energy where such energy may be analyzed to help determine mineral composition of rock surrounding a bore. As an example, nuclear magnetic resonance may be implemented (e.g., via a wireline, downhole NMR probe, etc.), for example, to acquire data as to nuclear magnetic properties of elements in a formation (e.g., hydrogen, carbon, phosphorous, etc.).

As an example, lithology scanning technology may be employed to acquire and analyze data. For example, consider the LITHO SCANNER technology marketed by SLB (Houston, Texas). As an example, a LITHO SCANNER tool may be a gamma ray spectroscopy tool.

As an example, a tool may be positioned to acquire information in a portion of a borehole. Analysis of such information may reveal vugs, dissolution planes (e.g., dissolution along bedding planes), stress-related features, dip events, etc. As an example, a tool may acquire information that may help to characterize a fractured reservoir, optionally where fractures may be natural and/or artificial (e.g., hydraulic fractures). Such information may assist with completions, stimulation treatment, etc. As an example, information acquired by a tool may be analyzed using a framework such as the aforementioned TECHLOG framework.

As an example, a workflow may utilize one or more types of data for one or more processes (e.g., stratigraphic modeling, basin modeling, completion designs, drilling, production, injection, etc.). As an example, one or more tools may provide data that can be used in a workflow or workflows that may implement one or more frameworks (e.g., PETREL, TECHLOG, PETROMOD, ECLIPSE, INTERSECT, SYMMETRY, etc.).

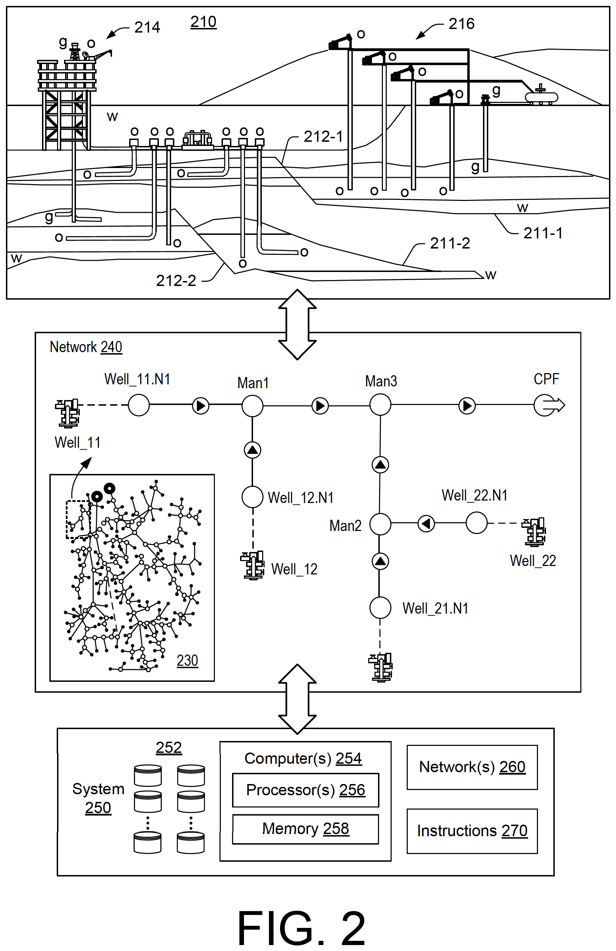

**FIG. 2** shows an example of a geologic environment 210 that includes reservoirs 211-1 and 211-2, which may be faulted by faults 212-1 and 212-2, an example of a network of equipment 230, an enlarged view of a portion of the network of equipment 230, referred to as network 240, and an example of a system 250. **FIG. 2** shows some examples of offshore equipment 214 for oil and gas operations related to the reservoir 211-2 and onshore equipment 216 for oil and gas operations related to the reservoir 211-1.

In the example of **FIG. 2****,** the various equipment 214 and 216 can include drilling equipment, wireline equipment, production equipment, etc. For example, consider the equipment 214 as including a drilling rig that can drill into a formation to reach a reservoir target where a well can be completed for production of hydrocarbons. In such an example, one or more features of the system 100 of **FIG. 1** may be utilized. For example, consider utilizing a drilling or well plan framework, a drilling execution framework, etc., to plan, execute, etc., one or more drilling operations.

In **FIG. 2****,** the network 240 can be an example of a relatively small production system network. As shown, the network 240 forms somewhat of a tree like structure where flowlines represent branches (e.g., segments) and junctions represent nodes. As shown in **FIG. 2****,** the network 240 provides for transportation of oil and gas fluids from well locations along flowlines interconnected at junctions with final delivery at a central processing facility.

In the example of **FIG. 2****,** various portions of the network 240 may include conduit. For example, consider a perspective view of a geologic environment that includes two conduits which may be a conduit to Man1 and a conduit to Man3 in the network 240.

As shown in **FIG. 2****,** the example system 250 includes one or more information storage devices 252, one or more computers 254, one or more networks 260 and instructions 270 (e.g., organized as one or more sets of instructions). As to the one or more computers 254, each computer may include one or more processors (e.g., or processing cores) 256 and a memory 258 for storing the instructions 270 (e.g., one or more sets of instructions), for example, executable by at least one of the one or more processors. As an example, a computer may include one or more network interfaces (e.g., wired or wireless), one or more graphics cards, a display interface (e.g., wired or wireless), etc. As an example, imagery such as surface imagery (e.g., satellite, geological, geophysical, etc.) may be stored, processed, communicated, etc. As an example, data may include SAR data, GPS data, etc. and may be stored, for example, in one or more of the storage devices 252. As an example, information that may be stored in one or more of the storage devices 252 may include information about equipment, location of equipment, orientation of equipment, fluid characteristics, etc.

As an example, the instructions 270 can include instructions (e.g., stored in the memory 258) executable by at least one of the one or more processors 256 to instruct the system 250 to perform various actions. As an example, the system 250 may be configured such that the instructions 270 provide for establishing a framework, for example, that can perform network modeling (see, e.g., the PIPESIM framework of the example of **FIG. 1****,** etc.). As an example, one or more methods, techniques, etc. may be performed using one or more sets of instructions, which may be, for example, the instructions 270 of **FIG. 2****.**

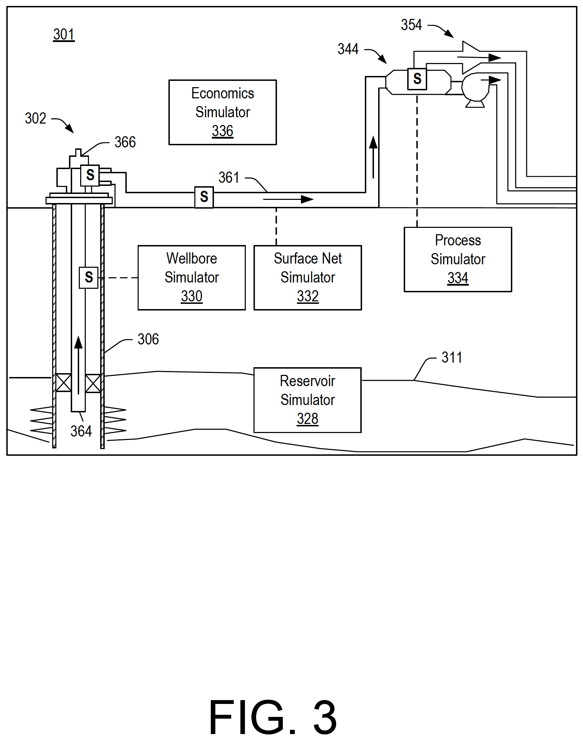

**FIG. 3** shows a schematic view of an example of a portion of a geologic environment 301 that can include various types of equipment. As shown in **FIG. 3****,** the environment 301 can include a wellsite 302 and a fluid network 344. In the example of **FIG. 3****,** the wellsite 302 includes a wellbore 306 extending into earth as completed and prepared for production of fluid from a reservoir 311 (e.g., one of the reservoirs 311-1 or 311-2). While the example of **FIG. 3** refers to production, various equipment, processes, etc., may provide for injection, additionally or alternatively to production.

In the example of **FIG. 3****,** wellbore production equipment 364 extends from a wellhead 366 of the wellsite 302 and to the reservoir 311 to draw fluid to the surface. As shown, the wellsite 302 is operatively connected to the fluid network 344 via a transport line 361. As indicated by various arrows, fluid can flow from the reservoir 311, through the wellbore 306 and onto the fluid network 344. Fluid can then flow from the fluid network 344, for example, to one or more fluid processing facilities.

In the example of **FIG. 3****,** sensors (S) are located, for example, to monitor various parameters during operations. The sensors (S) may measure, for example, pressure, temperature, flowrate, composition, and other parameters of the reservoir, wellbore, gathering network, process facilities and/or other portions of an operation. As an example, the sensors (S) may be operatively connected to a surface unit (e.g., to instruct the sensors to acquire data, to collect data from the sensors, etc.).

In the example of **FIG. 3****,** a surface unit can include computer facilities, such as a memory device, a controller, one or more processors, and a display unit (e.g., for managing data, visualizing results of an analysis, etc.). As an example, data may be collected in the memory device and processed by the processor(s) (e.g., for analysis, etc.). As an example, data may be collected from the sensors (S) and/or by one or more other sources. For example, data may be supplemented by historical data collected from other operations, user inputs, etc. As an example, analyzed data may be used to in a decision-making process.

As an example, a transceiver may be provided to allow communications between a surface unit and one or more pieces of equipment in the environment 301. For example, a controller may be used to actuate mechanisms in the environment 301 via the transceiver, optionally based on one or more decisions of a decision-making process. In such a manner, equipment in the environment 301 may be selectively adjusted based at least in part on collected data. Such adjustments may be made, for example, automatically based on computer protocol, manually by an operator or both. As an example, one or more well plans may be adjusted (e.g., to select optimum operating conditions, to avoid problems, etc.).

To facilitate data analyses, one or more simulators may be implemented (e.g., optionally via the surface unit or other unit, system, etc.). As an example, data fed into one or more simulators may be historical data, real time data or combinations thereof. As an example, simulation through one or more simulators may be repeated or adjusted based on the data received.

In the example of **FIG. 3****,** simulators can include a reservoir simulator 328, a wellbore simulator 330, a surface network simulator 332, a process simulator 334 and an economics simulator 336. As an example, the reservoir simulator 328 may be configured to solve for hydrocarbon flow rate through a reservoir and into one or more wellbores. As an example, the wellbore simulator 330 and surface network simulator 332 may be configured to solve for hydrocarbon flow rate through a wellbore and a surface gathering network of pipelines. As to the process simulator 334, it may be configured to model a processing plant where fluid containing hydrocarbons is separated into its constituent components (e.g., methane, ethane, propane, etc.), for example, and prepared for further distribution (e.g., transport via road, rail, pipe, etc.) and optionally sale. As an example, the economics simulator 336 may be configured to model costs associated with at least part of an operation. For example, consider MERAK framework (SLB, Houston, Texas), which may provide for economic analyses.

As an example, a system can include and/or be operatively coupled to one or more of the simulators 328, 330, 332, 334 and 336 of **FIG. 3****.** As an example, such simulators may be associated with frameworks and/or may be considered tools (see, e.g., the system 100 of **FIG. 1****,** etc.). Various pieces of equipment in the example geologic environment 301 of **FIG. 3** may be operatively coupled to one or more systems, one or more frameworks, etc. As an example, one or more of the sensors (S) may be operatively coupled to one or more networks (e.g., wired and/or wireless) for transmission of data, which, as explained, may include data indicative of production. As shown, a sensor (S) may be utilized for acquisition of downhole data and/or surface data, which can include data relevant to production (e.g., flow rate, temperature, pressure, composition, etc.) and/or injection. Such data may be utilized in a system such as, for example, the system 100 of **FIG. 1** for operational decision making, etc.

While various examples of field equipment are illustrated for hydrocarbon related production operations, as explained, field equipment may be for one or more other types of operations where such field equipment can acquire data (e.g., field equipment data) that can be utilized for operation decision making and/or one or more other purposes. As to wind energy production equipment, data can include meteorological data associated with a site or sites, turbine blade data, turbine performance data, orientation control data, energy conversion data, etc. As to solar energy production equipment, data can include meteorological data associated with a site or sites, solar cell data, solar panel performance data, orientation control data, energy conversion data, etc.

As explained, field equipment data may be suitable for use with one or more frameworks, one or more workflows, etc. Uses of field equipment data can involve transfers such as, for example, inter-framework transfers where one or more types of data related issues may arise due to formatting, unit conversions, coordinate reference system (CRS) conversions, etc. Use of field equipment data can be enhanced through automated or semi-automated processes that can perform tasks such as identifying data (e.g., data types, etc.) and/or assessing quality of data.

As explained, phenomena associated with a sedimentary basin (e.g., a subsurface region, whether below a ground surface, water surface, etc.) may be modeled using various equations (e.g., stress, fluid flow, phase, etc.). As an example, a numerical model of a basin may find use for understanding various processes related to exploration and production of natural resources (estimating reserves in place, drilling wells, forecasting production, etc.).

For application of a numerical technique, equations may be discretized using nodes, cells, etc. For example, a numerical technique such as the finite difference method can include discretizing a 1D differential heat equation for temperature with respect to a spatial coordinate to approximate temperature derivatives (e.g., first order, second order, etc.). Where time is of interest, a derivative of temperature with respect to time may also be provided. As to the spatial coordinate, the numerical technique may rely on a spatial grid that includes various nodes where a temperature will be provided for each node upon solving the heat equation (e.g., subject to boundary conditions, generation terms, etc.). Such an example may apply to multiple dimensions in space (e.g., where discretization is applied to the multiple dimensions). Thus, a grid may discretize a volume of interest (VOI) into elementary elements (e.g., cells or grid blocks) that may be assigned or associated with properties (e.g. porosity, rock type, etc.), which may be germane to simulation of physical processes (e.g., fluid flow, reservoir compaction, etc.).

As another example of a numerical technique, consider the finite element method where space may be represented by one dimensional or multi-dimensional "elements". For one spatial dimension, an element may be represented by two nodes positioned along a spatial coordinate. For multiple spatial dimensions, an element may include any number of nodes. Further, some equations may be represented by the total number nodes while others are represented by fewer than the total number of nodes (e.g., consider an example for the Navier-Stokes equations where fewer than the total number of nodes represent pressure). The finite element method may include providing nodes that can define triangular elements (e.g., tetrahedra in 3D, higher order simplexes in multidimensional spaces, etc.) or quadrilateral elements (e.g., hexahedra or pyramids in 3D, etc.), or polygonal elements (e.g., prisms in 3D, etc.). Such elements, as defined by corresponding nodes of a grid, may be referred to as grid cells.

Yet another example of a numerical technique is the finite volume method. For the finite volume method, values for model equation variables may be calculated at discrete places on a grid, for example, a node of the grid that includes a "finite volume" surrounding it. The finite volume method may apply the divergence theorem for evaluation of fluxes at surfaces of each finite volume such that flux entering a given finite volume equals that leaving to one or more adjacent finite volumes (e.g., to adhere to conservation laws). For the finite volume method, nodes of a grid may define grid cells.

As an example, a finite volume flow simulator may simulate phenomena using a grid where grid cells defined by the grid may include 6 faces (e.g., cuboid) addressable through three indices (e.g., such that the grid may be deemed a "structured" grid) and that geometry of the grid abides by one or more conditions (e.g., cells do not cross geologic faults and cells do not cross geologic horizons). As an example, in an effort to meet a geologic fault condition, a grid may be offset across one or more geologic faults. Construction of such a grid in a domain where topology of a fault network is complex (e.g., numerous X and Y-shaped intersections) may be non-trivial and demand resources that scale nonlinearly with increasing fault network complexity.

While an indexical coordinate system may be utilized, for example, with respect to a pillar grid, an indexical coordinate system may be used in conjunction with one or more other types of grids. For example, a grid that can define cells may be characterized using indexes such as *i, j,* and *k* to represent three spatial dimensions. Such indexes may be capable of representing a grid, for example, in a so-called structured manner (e.g., in contrast to an unstructured manner). As to an unstructured approach, it may partition a volume of interest into different elementary volumes, for example, that may not be readily indexed following a pre-defined, repeating pattern (e.g., consider a Cartesian cube with indexes I, J, and K, along x, y, and z axes).

As an example, a structured grid may facilitate various types of operations such as those related to matrices, for example, where nearest neighbors may form clusters or bands within a matrix. In turn, a matrix may be handled using a banded solver or other suitable technique. As to a solver for an unstructured grid, as an example, it may rely on input of connectivity information that specifies how grid nodes relate to individual cells. In such an example, a matrix that may not be readily amenable to a banded or other matrix handling technique, which, in turn, can increase computational resource demands, computation time, etc.

As mentioned, where a sedimentary basin (e.g., a subsurface region) includes various types of features (e.g., stratigraphic layers, faults, etc.), nodes, cells, etc., may represent, or be assigned to, such features. In turn, discretized equations may better represent the sedimentary basin and its features. As an example, a structured grid that can represent a sedimentary basin and its features, when compared to an unstructured grid, may allow for more simulations runs, more model complexity, less computational resource demands, less computation time, etc. In various examples, a structured approach and/or an unstructured approach may be utilized.

As an example, a grid may conform to structural features such as, for example, Y-faults, X-faults, low-angle unconformities, salt bodies, intrusions, etc. (e.g., geological discontinuities), to more fully capture complexity of a geological model. As an example, a grid may optionally conform to stratigraphy (e.g., in addition to one or more geological discontinuities). As to geological discontinuities, these may include model discontinuities such as one or more model boundaries. As an example, a grid may be populated with property fields generated, for example, by geostatistical methods.

As an example, a discontinuity may be discerned via seismology (e.g., seismic imaging) where, for example, a subsurface boundary or interface exists at which a physical quantity, such as the velocity of transmission of seismic waves, changes abruptly. For example, the velocity of P-waves increases from about 6.5 km/s to about 8 km/s at the Mohorovicic discontinuity between the Earth's crust and mantle.

Seismic interpretation is a process that involves examining seismic data (e.g., with respect to location and time or depth) to identify one or more types of subsurface structures (e.g., horizons, faults, geobodies, etc.). An interpretation process may consider vertical seismic sections, inline and crossline directions, horizontal seismic sections called horizontal time slices, etc. Seismic data may optionally be interpreted with other data such as, for example, well log data.

As an example, seismic interpretation may be performed using seismic to simulation software such as the PETREL seismic to simulation software framework, which includes various features, for example, to perform attribute analyses (e.g., with respect to a 3D seismic cube, a 2D seismic line, etc.), to analyze other data, to build models, etc. While the PETREL seismic to simulation software framework is mentioned, other types of software, frameworks, etc., may be employed.

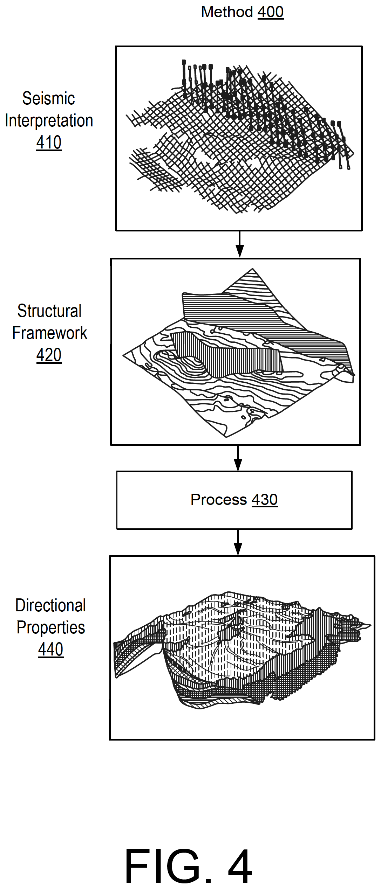

**FIG. 4** shows an example of a method 400 that includes a seismic interpretation block 410 for accessing at least seismic data as acquired by one or more sensors that sense seismic energy that travels in a subterranean environment, for performing a seismic interpretation based at least in part on at least a portion of the data and generating information (e.g., locations of structures, etc.). The method 400 also includes a structural framework block 420 for generating one or more structures (e.g., structures within a model, etc.) that represent physical structures in the subterranean environment. For example, interpretation may identify a horizon and structural model can include that horizon as a data-based structure with a likelihood that it actually exists in the subterranean environment given variations in seismic data (e.g., variations in traces, etc.). The method 400 includes a processing block 430, which may implement one or more techniques that can enhance how properties are handled where such properties can include one or more directional properties, which can be assigned to portions of a grid per the property block 440.

As an example, the directional properties as in the property block 440 can be stored in association with the grid, for example, in a storage device. Such a storage device can be part of a reservoir simulator or otherwise accessible by a reservoir simulator via one or more interfaces. For example, consider a reservoir simulator that includes one or more processors and memory where data and/or instructions stored in a storage device can be loaded into the memory via operation of at least one of the one or more processors.

As explained, a simulation run may be lengthy, depending on the number of equations (e.g., as may be associated with grid size, etc.). As an example, a simulation run may be of the order of hours or, for example, days. As may be appreciated, computer resources tied up for hours executing a simulation run may, where stability is lacking, not generate a result or not generate a meaningful result.

A lower run turnaround time can increase benefits from a simulation study allotted a budgeted time period. As a corollary, time spent in repeated runs fighting model instabilities or time-stepping can be counterproductive. Various factors can affect run time, for example, run time can equal the product (CPU/GPU time/step) × (number of timesteps). The first factor tends to be large and the second factor tends to be small for an implicit formulation, and conversely for the IMPES formulation. IMPES is a conditionally stable formulation that involves a timestep Δt < Δt* to reduce risk of oscillations and error growth, where Δt* can be defined as a maximum stable timestep. For IMPES, the conditional stability stems from the explicit treatment of nonpressure variables in interblock flow terms.

As explained, a simulator may utilize a preconditioner, for example, consider Nested Factorization (NF) and incomplete LU factorization (ILU(n)). The term "LU factorization" refers to the factoring of a matrix A into the product of a lower triangular matrix L and an upper triangular matrix **U,** which can be computationally expensive and involve Gaussian elimination. The term "ILU(n)" denotes incomplete LU factorization, where limited fill-in is allowed and n is the order of fill.

NF can perform suitably under particular conditions such as when transmissibilities associated with a particular direction in a grid dominate those in other directions uniformly throughout the grid. ILU(n) or red-black ILU(n) tend to be less sensitive than NF to ordering of blocks and spatial variation of direction of dominant transmissibilities.

As explained, transmissibility can be a measure of conductivity of a formation as to fluid where transmissibility may be defined by a particular simulator in a particular manner.

As to the INTERSECT simulator, it uses a computational solver that can implement preconditioning where such preconditioning can involve algebraically decomposing a system of equations into subsystems that may be handled based on their particular characteristics to facilitate solution. Resulting reservoir equations can be solved numerically by iterative techniques until convergence is reached for the entire system of equations, which can account for one or more wells, one or more surface facilities, etc.

The INTERSECT simulator framework can provide outputs for field tasks as to field operations, which may include operations as to surface facilities. As to an example of a workflow, consider a simulation that accounts for over 100 producing well and includes millions of cells in a grid, which can structurally model more than 10,000 fractures. As an example, time during execution of a run can include tasks such as evaluate residual and assemble Jacobian matrix, linear solver, nonlinear update and nonlinear convergence test. In such an example, time may be predominantly spent on the linear solver, followed by the evaluation of residual and assembly of the Jacobian matrix (e.g., or portions thereof, etc.).

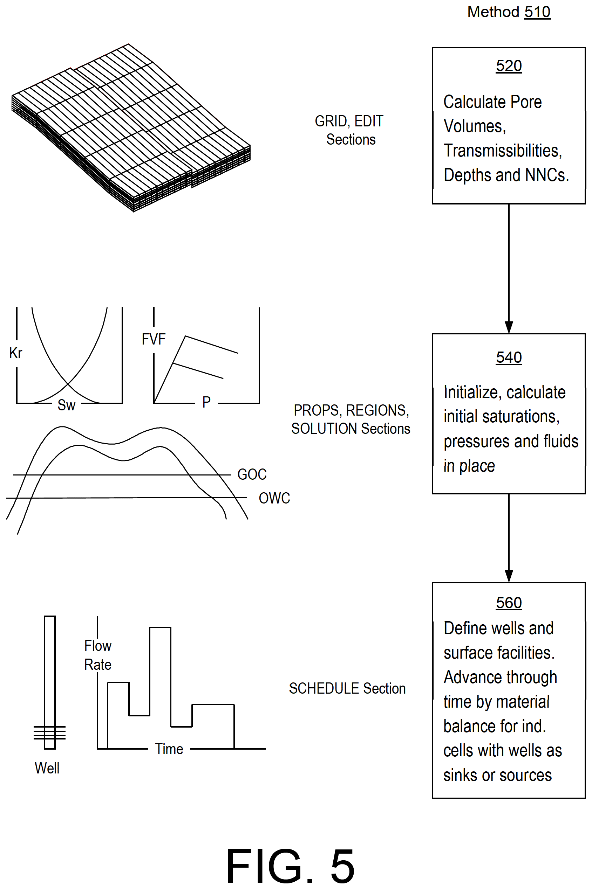

**FIG. 5** shows an example of a method 510 that includes a calculation block 520 for calculating pore volumes, transmissibilities, depths and non-neighbor connections (NNCs), an initialization and calculation block 540 for initializing and calculating initial saturations, pressure and fluids in place, and a definition and time progression block 560 for defining one or more wells and surface facilities and advancing through time, for example, via material balances for individual cells (e.g., with the one or more wells as individual sinks and/or sources). In such an example, the block 520 may include one or more sets of instructions for generating, adjusting, etc. one or more grids, which may represent one or more faults, a portion of a fault, etc.

As an example, a method can include operating a reservoir simulator to generate simulation results and determining a well trajectory using the generated simulation results and/or constructing a well via drilling into a reservoir using the generated simulation results. As explained, a method can improve reservoir simulator operation to generate more accurate simulation results that improve one or more field operations associated with production of fluid from a reservoir. Such a method improves operation of a reservoir simulator that performs a technological process in the realm of physical objects and physical substances such as a reservoir being a physical object and fluid being a physical substance. As an example, a workflow can include seismic imaging to generate seismic images, identifying structures associated with a reservoir using the seismic images, generating a model that includes the reservoir, assigning directional properties to the model, operating a reservoir simulator to generate fluid flow patterns using the model and the directional properties, drilling a borehole according to a trajectory determined using the fluid flow patterns, completing a well using the borehole, and producing fluid from the reservoir using the well. As an example, drilling a borehole according to a trajectory determined using the fluid flow patterns may also include using directional permeabilities. For example, directional permeabilities may provide an indication of formation properties associated with stability of a borehole in a formation. As an example, an angle of a borehole may be determined using directional permeabilities as the angle may provide for increases stability while maintaining the borehole in a desired reservoir region where a completed well can include perforations that may be directional where direction is based at least in part on directional permeability. As an example, a hydraulic fracturing workflow can include well placement and/or fracture placement based at least in part on directional permeabilities, as may be taken into account by fluid flow simulation results and/or as may be taken into account by hydraulic fracturing simulation results (e.g., by a hydraulic fracturing simulator). In such an example, fractures may be generated using an equipment configuration that aims to generate fractures that provide for favorable drainage of fluid from a reservoir (e.g., fracture orientation with respect to directional permeability). As an example, fractures tend to grow in a particular orientation with respect to a permeability tensor orientation. As an example, a reservoir simulator may simulate a hydraulically fractured reservoir using directional permeabilities that account for one or more hydraulic fractures.

As an example, a method can include utilizing permeability where permeability defines an ability to allow flow to occur at one or more points. As an example, a method can include utilizing transmissibility where transmissibility defines an ability to allow flow between points. As an example, transmissibility can be defined as a measure of conductivity of rock (e.g., reservoir rock, etc.) as may be adjusted by viscosity of flowable fluid (e.g., reservoir fluid, injected fluid, etc.). As an example, a simulator can include computing transmissibility between various cell centers of cells defined by a grid.

As to the initialization and calculation block 540, for an initial time (e.g., t₀), saturation distribution within a grid model of a geologic environment and pressure distribution within the grid model of the geologic environment may be set to represent an equilibrium state (e.g., a static state or "no-flow" state), for example, with respect to gravity. As an example, to approximate the equilibrium state, calculations can be performed. As an example, such calculations may be performed by one or more sets of instructions. For example, one or more of a seismic-to-simulation framework, a reservoir simulator, a specialized set of instructions, etc. may be implemented to perform one or more calculations that may aim to approximate or to facilitate approximation of an equilibrium state. As an example, a reservoir simulator may include a set of instructions for initialization using data to compute capillary and fluid gradients, and hence fluid saturation densities in individual cells of a grid model that represents a geologic environment.

As an example, a reservoir simulator may advance in time. As an example, a numeric solver may be implemented that can generate a solution for individual time increments (e.g., points in time). As an example, a solver may implement an implicit solution scheme and/or an explicit solution scheme, noting that an implicit solution scheme may allow for larger time increments than an explicit scheme. Times at which a solution is desired may be set forth in a "schedule". For example, a schedule may include smaller time increments for an earlier period of time followed by larger time increments.

A solver may implement one or more techniques to help assure stability, convergence, accuracy, etc. For example, when advancing a solution in time, a solver may implement sub-increments of time, however, an increase in the number of increments can increase computation time. As an example, an adjustable increment size may be used, for example, based on information of one or more previous increments.

As an example, a numeric solver may implement one or more of a finite difference approach, a finite element approach, a finite volume approach, a meshless approach, etc. As an example, the ECLIPSE reservoir simulator can implement central differences for spatial approximation and forward differences in time. As an example, a matrix that represents grid cells and associated equations may be sparse, diagonally banded and blocked as well as include off-diagonal entries. As an example, the INTERSECT simulator may be implemented.

As an example, a solver may implement an IMPES scheme. Such a scheme may be considered to be an intermediate form of explicit and implicit techniques. In an IMPES scheme, saturations are updated explicitly while pressure is solved implicitly. As an example, a solver may implement an implicit scheme that may be adaptive (e.g., an adaptive implicit scheme).

As to conservation of mass, values (e.g., for water, gas and oil) in individual cells of a grid cell model may be specified to sum to a certain value, which may be considered a control criterion for mass conservation. As black oil equations tend to be non-linear, a Newton-Raphson type of technique may be implemented, which includes determining derivatives, iterations, etc. For example, a solution may be found by iterating according to the Newton-Raphson scheme where such iterations may be referred to as non-linear iterations, Newton iterations or outer iterations. Where one or more error criteria are fulfilled, the solution procedure has converged, and a converged solution has been found. Thus, within a Newton iteration, a linear problem is solved by performing a number of linear iterations, which may be referred to as inner iterations.

As an example, a solution scheme may be represented by the following pseudo-algorithm:

```
// Pseudo-algorithm for Newton-Raphson for systems
     initialize(v);
     do {
          //Non-linear iterations
          formulate_non_linear_system(v);
          make_total_differential(v);
          do {
               // Linear iterations:
               update_linear_system_variables(v);
          }
          while((linear_system_has_not_converged(v));
          update_non_linear_system_after_linear_convergence(v);
     }
     while((non_linear_system_has_not_converged(v))
```

As an example, a solver may perform a number of inner iterations (e.g., linear) and a number of outer iterations (e.g., non-linear). As an example, a number of inner iterations may be of the order of about 10 to about 20 within an outer iteration while a number of outer iterations may be about ten or less for an individual time increment.

As mentioned, a grid may be revised (e.g., adjusted, etc.) based at least in part on simulation results, which may optionally include results such as convergence behavior. For example, where convergence may be possibly improved, one or more adjustments may be made to a grid where such one or more adjustments may allow for convergence, expedite convergence, etc.

As explained, a system can provide for decision making that can improve operation a simulator for performing simulation tasks that aim to generate results as to one or more physical phenomena. While various examples refer to a reservoir simulator, one or more other types of simulators may be utilized with such a system. While grid and cells are mentioned, as explained, such an approach may be applied to various types of discretizations, including, for example, meshless approaches to discretization.

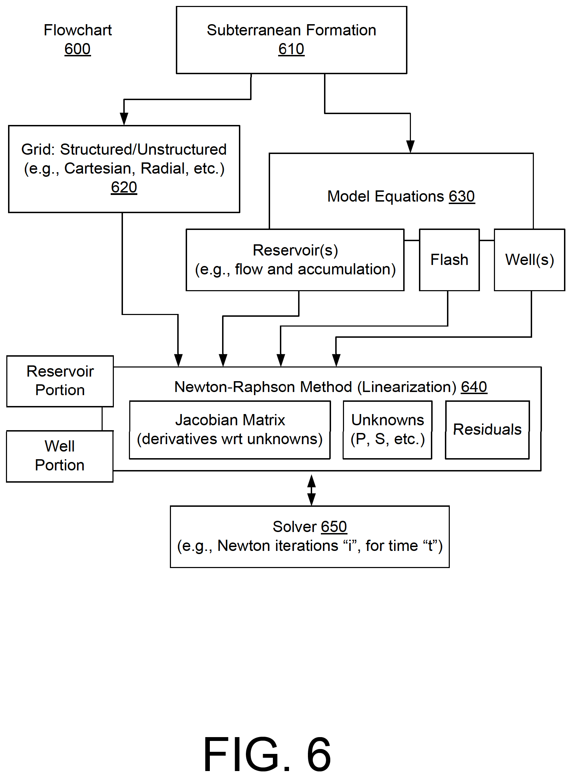

**FIG. 6** shows a flowchart 600 of an example of a process for simulating physical phenomena associated with a subterranean formation 610, which may be, for example, a portion of the geologic environment 150 of **FIG.** 1 or other geologic environment.

In the example of **FIG. 6****,** a grid block 620 provides for gridding a surface, a volume, etc., to represent the subterranean formation 610 while a model block 630 provides equations for modeling physical phenomena associated with the subterranean formation 610. The equations of the model block 630 may be discretized or otherwise described with respect to one or more grids as provided by the grid block 620 (e.g., structured, unstructured, structured and unstructured).

As an example, equations may be solved to describe how values of dependent variables such as pressure (e.g., including capillary pressure, temperature, saturation, mole fraction (e.g., liquid mole fraction, vapor mole fraction, aqueous mole fraction, etc.) and mass rate (e.g., via mass conservation equations) can change with respect to time. Equations may include various property related terms, for example, porosity, pore volume, viscosity, mass density, gravity density and permeability. As an example, equations may be formulated with respect to molar flow (e.g., to provide values that readily illustrate phenomena such as reaction conversion and stoichiometry).

As an example, reservoir simulation can involve numerical solution of a system of equations that describes the physics governing certain behaviors of multicomponent, multiphase fluid flow in porous media of a subterranean reservoir. A system of equations may be formulated as coupled nonlinear partial differential equations (PDEs). Such PDEs may be discretized spatially and optionally temporally with respect to one or more grids. Systems of equations may be solved for unknowns via an iterative process. As an example, iterations may occur for a series of time steps until a prescribed time is reached.

In the example of **FIG. 6****,** a linearization block 640 provides for linearization of a system of equations such as those provided by the model block 630. For example, linearization of a nonlinear system of equations may occur using a Newton-Raphson method that involves formation of a Jacobian matrix of derivatives with respect to various unknowns. As an example, the subterranean formation 610 may be, or planned to be, intersected with one or more wells. In such an example, a system of equations may include a reservoir portion and a well portion. With respect to ordering of equations that describe such portions, the introduction of the well portion may impact one or more of ordering, matrix size, etc., compared to a system of equations that accounts for a reservoir without one or more wells. For example, a reservoir portion may result in a diagonally structured Jacobian matrix (e.g., with some diagonal band-width) while a well portion may result in addition of borders to the diagonally structured Jacobian matrix.

As an example, unknowns may include pressure "P" unknowns and saturation "S" unknowns. For example, one or more grids may be imposed upon an area of interest in a reservoir model to define a plurality of cells, each having one or more unknown properties associated therewith. Examples of unknown properties can include pressure, temperature, saturation, permeability, porosity, etc.

A solver block 650 may provide for solving a linearized system of equations (e.g., a system of linear equations), for example, for a particular time. As an example, a solver block 650 may implement one or more techniques. In the example of **FIG. 6****,** the solver block 650 may iterate in an effort to reach one or more convergence criteria (e.g., acceptable error). Where time is involved, time may be incremented (e.g., via a time step) after convergence has been reached for a prior time.

As an example, a matrix may be ordered in a cell-by-cell manner where cells have associated unknowns. Such a matrix may include zero entries and nonzero entries. Size or shape of a block may be determined by cell neighbors or other relationships. Further, characteristics of a numerical technique may have an effect on one or more of block size, shape, etc. (e.g., order of a finite difference technique, etc.).

As an example, a model may provide for modeling three-phase black oil, for example, via mass conservation equations and a pressure drop equation associated with one or more well segments. As an example, well equations may be solved along with reservoir equations to give pressure, flow rates (e.g., mass flow rates, volume flow rates, velocities, etc.) and composition (e.g., phase composition, etc.) in each segment. As explained, a framework such as the INTERSECT framework may be utilized.

As an example, a framework may provide dynamic simulator support for subsurface reservoir initialization. As to initialization, as explained, an initialization and calculation process may be implemented for initializing and calculating initial saturations, pressure and fluids in place. As explained, for an initial time, a saturation distribution may be set within a grid model of a geologic environment along with a pressure distribution within the grid model of the geologic environment. As an example, these distributions may be set to represent an equilibrium state (e.g., a static state or "no-flow" state), for example, with respect to gravity. As explained, to approximate the equilibrium state, calculations can be performed. As an example, such calculations may be performed by one or more sets of instructions. For example, one or more of a seismic-to-simulation framework, a reservoir simulator, a specialized set of instructions, etc. may be implemented to perform one or more calculations that may aim to approximate or to facilitate approximation of an equilibrium state. As explained, a reservoir simulator may include a set of instructions for initialization using data to compute capillary and fluid gradients, and hence fluid saturation densities in individual cells of a grid model that represents a geologic environment. Such an approach to initializations may be relatively time consuming and resource intensive. Further, as explained, if initial distributions may include deviations from physical reality, these may present challenges in convergence of a simulator. As an example, a framework that provides dynamic simulator support may improve initialization and performance of a simulator.

As explained, reservoir simulator initialization is a required process that can involve integrating data from various sources, for example, consider one or more of fluid property sources, wireline logs, and core analysis sources. Initialization may be considered a task that lies at the intersection of petrophysical evaluation, static modeling, and dynamic reservoir simulation.

In various instances, a reservoir simulator may offer one or more options that aim to honor fluid saturation inputs, such as "enumeration" or a SWATINIT option in the ECLIPSE reservoir simulator. As explained, initialization acts to define initial conditions of a reservoir model at the beginning of simulation (e.g., at an initial time). For example, for ECLIPSE, the following time-dependent properties are to be defined: pressure (P), phase saturation (S), solution gas-oil ratio (RS) and vaporized oil-gas ratio (RV) for black oil models, component mole fractions (XMF and YMF) for compositional models, and temperature (TEMPI) for thermal models; noting that one or more other time-dependent properties may also be in need of values or definition, which may depend on use of one or more simulation options.

The ECLIPSE reservoir simulator may provide one or more techniques for initialization, which may include "equilibration", where an assumption is made that gas, oil and water are in a hydrostatic equilibrium, and compositions are in a thermodynamic equilibrium. In such an approach, using the EQUIL keyword, a reference pressure and a reference depth are provided together with other details that allow the ECLIPSE framework to calculate initial time-dependent properties. As mentioned, another approach is "enumeration" where each initial time-dependent property may be explicitly specified on each grid block. In such an approach, some level of awareness has to be taken, as the initial fluid distribution may not be in equilibrium. As to yet another approach, consider "restart", where an initial solution is read from a restart file generated by an earlier run. In this case the initial fluid distribution may not be in equilibrium.

As to SWATINIT, it may be used as a tool to conserve water saturation modeling in a model. However, SWATINIT will not set the "initial" water saturation in an ECLIPSE run, it will scale the capillary pressure table on a cell-by-cell basis, with exceptions. Water saturation initialization in ECLIPSE at time zero may be performed using a capillary pressure function from SWOF/SWFN tables, for example, in an effort to maintain initial dynamical stability. The impact of SWATINIT is to allow for cell-by-cell scaling of the capillary pressure function before it is used for initialization.

While various types of inputs tend to be available for wells with wireline logs, such inputs may often be absent for regions between wells within a reservoir. To account for lack of data (e.g., values), a petrophysical saturation model may be imposed or an approach may employ geostatistical tools to distribute saturations across a reservoir domain. However, such approaches may lead to unstable initial conditions and poor simulation performance.

Alternatively, an approach may involve assigning distinct capillary pressure curves to different rock types and iteratively improving a saturation match with well log data. Such a trial-and-error technique can be time-consuming and inefficient.

As an example, a framework may provide for addressing various challenges involved in initialization. For example, consider a framework that can implement a reservoir initialization workflow designed to handle initialization dynamically as part of a reservoir initialization routine. Such an automated process can leverage machine learning and optimization algorithms to expedite initialization, to thereby help to ensure stability and efficiency.

As an example, a framework can leverage extensibility of a reservoir simulator, such as, for example, the INTERSECT reservoir simulator, allowing for input of various well logs (e.g., GR, DENS, NEU, resistivity logs, porosity, Vshale (Vclay), water saturation, etc.), pressure point data (RFT/MDT), and laboratory reports directly into a reservoir simulator. In such an example, the framework can implement various generative Al (GenAl) capabilities that extract relevant information from the inputs where the framework may then implement a machine learning model to estimate capillary pressure and relative permeabilities for various rock types. In such an approach, the reservoir simulator can iterate to achieve an optimal match of pressure and fluid saturations. In various instances, multiple iterations may be performed, for example, where fluid density varies with pressure, where capillary pressure reflects the difference between phase pressures, and where pressure conditions may be initially unknown.

As an example, an ML model and/or GenAl capabilities may be embedded or otherwise operatively coupled to a simulator. For example, consider equipment where components may operate via one or more application programming interfaces (APIs). As an example, equipment may be controlled to make API calls and receive information responsive to such API calls. In such an example, one or more types of networks may provide for transmission and receipt of calls and responses. As an example, equipment may be local or distributed (e.g., part local, part in cloud, etc.). As an example, instructions for network transmissions may be triggered based on one or more types of criteria, which may include criteria that relate to dynamic operations in a field, a simulator, etc. For example, consider an approach where field operations, which may include operations of pumps, valves, sensors, etc., may provide feedback or triggers for framework operations. In such an approach, output of a framework may provide for control of one or more field operations (e.g., via control of field equipment, etc.). As an example, consider an approach where physical dynamics can trigger modeling to generate results that may be utilized dynamically to control one or more field operations.

As an example, in reservoir simulation, relative permeability can be specified spatially for simulating multi-phase flow in porous media (e.g., reservoir rock, etc.). As an example, in reservoir simulation, capillary pressure can be specified spatially, for example, as the pressure difference between two fluids across an interface between them (e.g., oil-water interface). Capillary pressure can be a factor in determining distribution of fluids in a reservoir and how fluids move through porous media (e.g., pore spaces).

As explained, a reservoir simulator can utilize capillary pressure data and relative permeability data, along with other parameters (e.g., fluid properties, rock properties), to predict fluid flow and reservoir behavior. In general, capillary pressure and relative permeability tend to be related in multiphase flow within porous media, such as reservoir rocks. Capillary pressure can govern distribution of fluids in pore space, influencing the movement and flow of different fluids, which is characterized by relative permeability. In various instances, relative permeability and capillary pressure may be determined experimentally using techniques like core flooding, or they may be derived from numerical simulations. Various factors can influence relative permeability and capillary pressure, including, for example, reservoir wettability (e.g., water-wet, oil-wet, etc.), pore size and geometry, fluid viscosity, and phase behavior.

As to capillary pressure, it can be dynamic in nature and can differ substantially from steady-state capillary pressure measurements. Dynamic capillarity can be influenced by flow rates and the movement of fluid fronts. In anisotropic reservoirs (e.g., where properties vary in different directions), relative permeability and capillary pressure can also be anisotropic.

In various instances, upscaling may be employed, for example, to translate laboratory-scale data (e.g., from core samples, etc.) to data suitable for use in field-scale simulations. As an example, upscaling may involve creating a representation of reservoir properties at a coarser grid scale, while maintaining relevant behavior.

As an example, a framework may provide for automated upscaling, for example, by accessing data from one or more sources, which may include data of one or more types. In such an example, the framework may provide for grid creation, grid population, etc., which may be performed in an automated manner at a resolution suitable for estimating values for parameters of a reservoir simulator (e.g., capillary pressure and relative permeability). In such an example, a grid may be represented with a desired coarseness that may be the same or may differ from that of a reservoir simulation grid (e.g., as utilized to discretize a series of equations).

As an example, a framework may provide for integration of multidisciplinary data. For example, consider an approach that provides for seamless integration of data from diverse disciplines (e.g., sources), enabling initialization of a stable reservoir simulator model rapidly and efficiently.

As an example, data may be from geological surveys that may be or include surveys of geology of mineral deposits. As an example, a geological survey may be performed, for example, by taking mineral samples, mapping rock units, mapping structures, and mapping mineralized zones.

As an example, data may be from geochemical surveys that may be or include surveys of chemistry of mineral deposits. As an example, a geochemical survey may be performed, for example, by sampling soils, waters, and bedrock to identify areas of anomalous mineral values and quantities that may in turn identify mineral deposits.

As an example, data may be from geophysical surveys that may be or include surveys of physical characteristics of mineral deposits to measure physical differences between rock types or physical discontinuities in geological formations. As an example, a geophysical survey may be performed, for example, via magnetic and electromagnetic surveys, gravity surveys, seismic surveys, and multispectral surveys.

As explained, data may be acquired using one or more techniques, technologies, etc. As an example, surface data (e.g., drone, satellite, plane, exposed land, seismic systems, etc.) may be acquired and utilized. As an example, subsurface data (e.g., well logs, drilling data, mud logs, etc.) may be acquired and utilized. As an example, lab data (e.g., samples, cores, synthetic, etc.) may be acquired and utilized. As an example, data with respect to one or more fluids in one or more phases may be acquired and utilized.

As explained, a framework may harness extensibility of one or more reservoir simulators, GenAl, and machine learning, for example, to streamline data extraction, optimization, and automation processes. Such an approach helps to ensure that reservoir initialization is both stable and expedited.

As an example, GenAl may leverage one or more machine learning models, techniques, etc. For example, consider GenAl leverage of deep learning techniques. A GenAl approach may provide for generation of what may be deemed "new" content. As an example, a GenAl approach may implement a foundation model, as a type of a deep learning model that serves as the basis for single or multimodal types of generative workflows. For example, a large language model (LLMs) may be a single mode type of model that operates using text. As to other modes, consider image generation, sound generation, etc. As an example, a multimodal approach may include various modes that may provide for inputs and/or outputs of one or more modes, as appropriate or desirable.

As an example, a framework may operate in an automated or semi-automated manner. In either instance, a framework may provide for automatic handling of reservoir initialization, which is a process traditionally performed by one or more subsurface experts (e.g., human domain experts in subsurface characterizations). Where a human is involved, a workflow may be referred to as having a human-in-the-loop (HITL).

As an example, a framework may provide for operative coupling with a reservoir simulator such that the reservoir simulator may autonomously manage initialization (e.g., via API calls, API responses, etc.), for example, where additional uninterpreted data may be made available (e.g., data not typically required in traditional numerical simulation workflows).

As explained, a framework may address longstanding challenges and pave the way for improvements in automated subsurface modeling. For example, consider an ability to extend functionality of one or more existing simulation platforms without demand for fundamental changes to a core architecture. Such an approach may also provide for seamless integration of custom or customized algorithms, data-driven models, or new physical formulations.

As an example, a framework may provide an automation process for reservoir initialization that can improve an overall workflow in field development. Such a framework may improve the standing of a reservoir simulator in the market. As an example, a framework may provide for less reliance on a HITL and thereby provide a higher level of automation, which may also provide for improved objectivity and reproducibility.

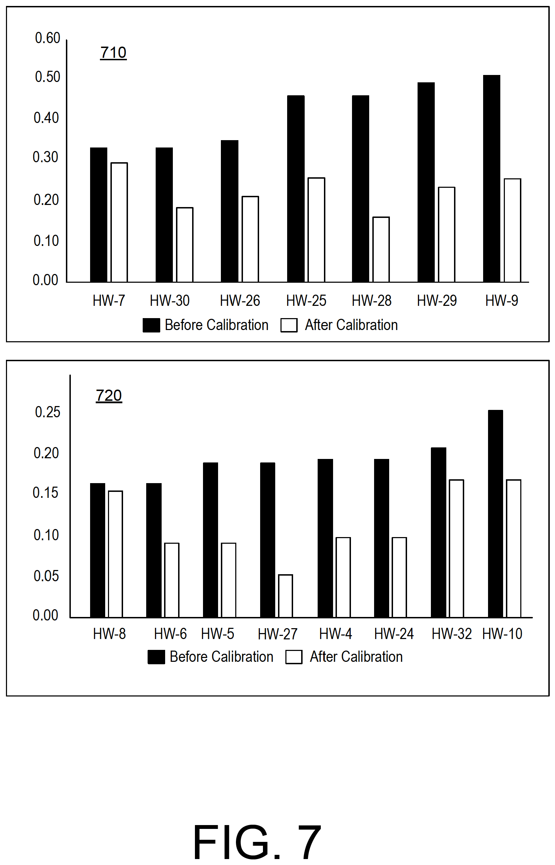

**FIG. 7** shows example plots 710 and 720 of the impact of an example framework on reducing saturation error in reservoir initialization where accurate saturation initialization can improve reservoir model stability, which leads to a better performance of a reservoir simulator. Specifically, the plots 710 and 720 show before and after calibration using a dynamic calibration workflow, reducing the saturation error in reservoir initialization. In such an approach, a simulator may operate more efficiently and consume fewer resources. For example, consider operating to perform a simulation in less time using less energy, which may translate into fewer emissions (e.g., greenhouse gas, etc.), less water usage (e.g., for cooling, etc.), etc.

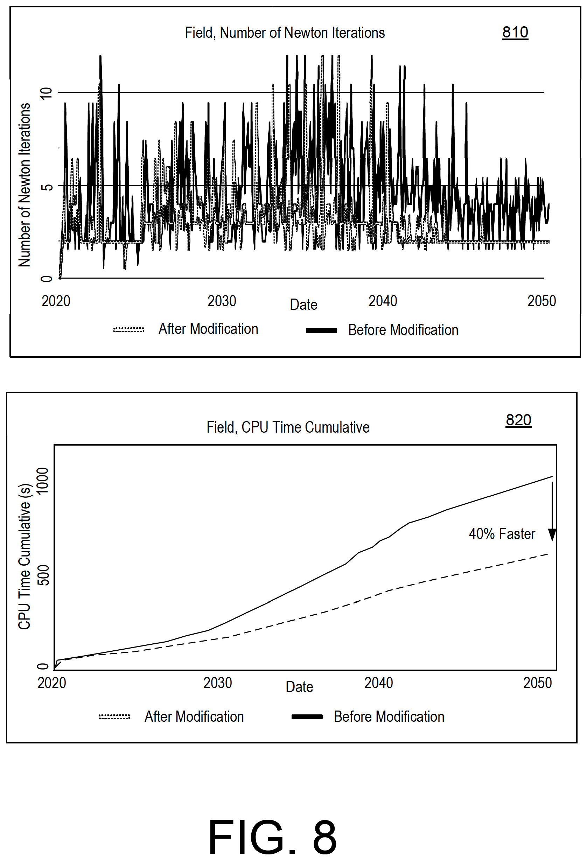

**FIG. 8** shows example plots 810 and 820 performance improvement of a reservoir simulator as an impact of dynamic initialization. Specifically, the plot 810 shows number of Newton iterations with respect to time as simulation progresses forward in time over a number of decades (e.g., within the scope of a reservoir production lifetime, etc.). In the plot 810, without implementation, iteration values are represented in black while with implementation iteration values are represented in white with dashed line boundaries. In comparison, for various times, the number of iterations may be reduced from more than 10 to approximately 2. Further, as number of iterations is increased, digital roundoff error increases, which may have an impact on accuracy, ultimate solution, and risk of non-convergence. In general, number of iterations can be a proxy for model stability in that more iterations means that a solver is operating less efficiently in reducing error to arrive at a suitable, converged solution (e.g., for a particular time step). As to the plot 820, it shows processor time (e.g., CPU, core, GPU, etc.) with respect to simulation time in years. As indicated, for a simulation with an initial time of 2020 and a final time of 2050 (e.g., 30 years), without dynamic initialization, the reservoir simulator took approximately 1000 seconds; whereas, with dynamic initialization, the reservoir simulator took approximately 600 seconds (e.g., a savings of approximately 400 seconds). As mentioned, the solution of the dynamic initialization approach can also be more accurate for one or more reasons, which can include a better starting point and lesser digital roundoff error. As explained, each iteration involves some amount of digital roundoff error and hence more iterations translates into more digital roundoff error. In a time-based simulation, the roundoff errors carry forward in time in that each solution for each time step becomes more contaminated with roundoff error as the simulation progresses.

In computing, a roundoff error, also called rounding error, is the difference between the result produced by a given algorithm using exact arithmetic and the result produced by the same algorithm using finite-precision, rounded arithmetic. Rounding errors are due to inexactness in the representation of real numbers and the arithmetic operations performed with them. This is a form of quantization error. When using approximation equations or algorithms, especially when using finitely many digits to represent real numbers (e.g., which in theory have infinitely many digits), one of the goals of numerical analysis is to estimate computation errors. Computation errors, also called numerical errors, include both truncation errors and roundoff errors. When a sequence of calculations with an input involving roundoff error is made, errors may accumulate, sometimes dominating the calculation. In ill-conditioned problems, significant error may accumulate.

Two major facets of roundoff errors involved in numerical calculations include (1) the ability of computers to represent both magnitude and precision of numbers is inherently limited; and (2) certain numerical manipulations can be highly sensitive to roundoff errors, which can result from both mathematical considerations as well as from the way in which computers perform arithmetic operations.

Where large matrixes are involved, techniques that utilize preconditioners, etc., may introduce roundoff errors. For example, roundoff errors can occur in preconditioner simulation, particularly in iterative solvers like conjugate gradient (CG) and generalized minimal residual method (GMRES), which can impact accuracy and convergence of numerical solutions. GMRES is an iterative method for the numerical solution of an indefinite nonsymmetric system of linear equations. Such solvers may be implemented with preconditioning, which involves application of a transformation (e.g., a preconditioner) that conditions a given problem (e.g., represented as a series of equations) into a form that is more suitable for numerical solving methods. Preconditioning is typically related to reducing a condition number of the problem. As explained, a preconditioned problem may then be solved using an iterative method. Preconditioned iterative solvers tend to outperform direct solvers (e.g., Gaussian elimination) for large, especially for sparse, matrices.

As explained, a reservoir simulator may utilize a linear solver. For example, consider fully implicit (FI) solution techniques, in which the set of governing PDEs is properly discretized in time (e.g., consider a backward Euler scheme), and space, and tackled by assembling and linearizing a single system of equations to solve model unknowns simultaneously. Due to the usually large size of these systems arising from real-world models, iterative methods, specifically Krylov subspace solvers, may be used where success thereof largely revolves around the quality of a preconditioner that is supplied to accelerate convergence. Often, the use of these two intertwined elements (solver and preconditioner) provide for practical results. The progressive increase in reservoir model size and complexity, along with the introduction of additional physics to the classical flow problem, uncover limits of existing solvers. Intensive usage of computational and memory resources can be drawbacks in practice, resulting in unpleasantly slow convergence rates. Developing efficient, robust, and scalable preconditioners, often relying on physics-based assumptions, tends to be an acceptable way to avoid potential bottlenecks in the solving phase of a reservoir simulator.

As an example, a framework may provide for interoperability as to initialization in a manner that may or may not consider one or more aspects of preconditioning. For example, a framework may provide for initialization in a manner that improves preconditioning or otherwise tailors preconditioning. As explained, condition number, sparsity, etc., may characterize a matrix, which depends on an underlying formulation of a discretized problem in a physical space (e.g., one or more spatial dimensions). As an example, a framework may provide for initialization in a manner that addresses physical realities of a subsurface environment and computational realities. For example, values may be tailored within a gridded space that improve performance of a reservoir simulator as to providing indicia of a suitably sufficient initial condition and values that can improve performance of a solver and/or a preconditioner. In various examples, a framework may provide for initialization with smoothing, interpolation, data filling, coding of grid cells, etc. For example, a framework may provide for generation of realistic initial values and values tailored for improved reservoir simulator performance. Such an approach is an advancement over an approach that aims to provide realistic initial values only without concern for particular aspects of a solver and/or preconditioner. As to coding of grid cells, one or more techniques may be implemented, which may provide for one or more of structured and unstructured types of grids. As an example, a framework may provide for re-gridding and/or grid refinement. For example, where gradients in a solution space may be steep (e.g., per one or more criteria), grid refinement may be implemented to reduce the amount of gradient over one or more grid cells. In such an example, consider a gradient over a number of grid cells being reduced on a per grid cell basis through introduction of additional grid cells (e.g., grid refinement). In various instances, such an approach may provide for more accurate solutions, improved convergence, modeling more complex phenomena, etc.

As an example, a framework may provide for selection of one or more options as to solver and/or preconditioner utilized. As an example, a framework may account for size of a problem and, for example, matrix condition, matrix sparsity, etc. As an example, a framework may provide for assessing gradients that may impact physical phenomena. For example, consider generating values that may be limited in spatial gradients according to a spatial scale (e.g., based on resolution, actual dimensions, etc.). In various instances, gradients drive changes in simulation results and may also pose challenges as to convergence, which may, in various instances, be reflected in matrix characteristics. As an example, a framework may account for time step size and/or use of a variable time step in performing simulations with respect to time. In various instances, too large of a time step may result in instability while too small of a time step may demand too many steps in time and, hence, introduce additional roundoff error. As an example, a framework may provide for initialization in a manner that helps to optimize reservoir simulator performance for a given problem. As an example, a combination of time step size and grid size may be adjusted, which may depend on gradients with respect to time and/or space.

As demands to increase automation continue, technologies such as GenAl, machine learning, and data integration, may allow a framework to be more flexible and extensible to support more dynamic, intelligent, and adaptive reservoir simulation. As explained, a framework may provide for enhancing an existing reservoir simulator and its workflows, for example, by integrating dynamic initialization into one or more existing optimization routines. Such an approach can allow for better forecasting, scenario analysis, and decision-making, which may be tailored to a specific asset or assets (e.g., reservoir, field, etc.).

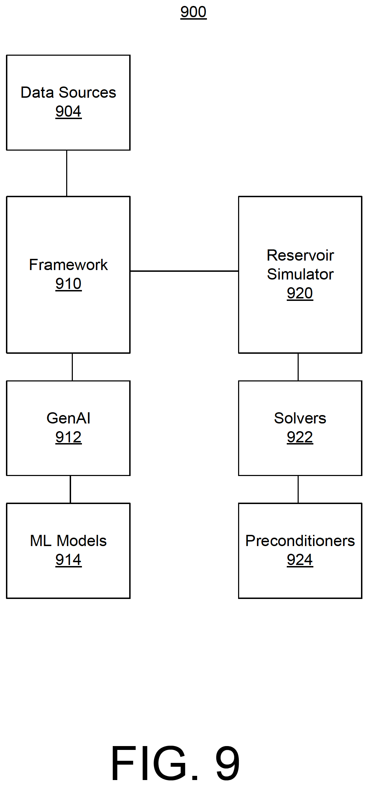

**FIG. 9** shows an example of a system 900 that includes data sources 904, a framework 910 with GenAl 912 and ML model 914 components, and a reservoir simulator 920 with solver(s) 922 and preconditioner(s) 924 components. In such an example, the framework 910 can be operatively coupled to one or more of the data sources 904 and dynamically interact with the reservoir simulator 920 to generate initialization data to initialize a simulation to be performed by the reservoir simulator 920 (e.g., using a solver, a solver and a preconditioner, etc.).

As an example, where a reservoir a simulator experiences one or more types of convergence issues, a system may operate to re-initialize a simulation, for example, with a different set of initialization data. For example, if a first set of initialization data result in one or more issues, a second set of initialization may be generated, which may leverage a current solution that may be experiencing an issue, such as, for example, a convergence issue. As an example, a system may provide for one or more of time step adjustment, grid adjustment, and initialization data adjustment. As explained, success of a reservoir simulation may depend on various factors, which may include one or more of time step interval (e.g., static and/or dynamic), grid size (e.g., grid cell size or sizes), and initialization data. In various instances, having initialization data that comport with real-world physics within a spatial region can be beneficial as PDEs are solved that describe real-world physics. In other words, if initialization data are far from being descriptive of a real-world scenario, then a solver may experience issues when trying to model dynamic physical phenomena. In various instances, while initialization data may deviate somewhat from a real-world scenario, they may still be suitable for making a simulation more efficient (e.g., converging to a solution with fewer iterations, etc.).

As explained, an artificial intelligence approach to initialization of a reservoir simulator may reduce demands for human involvement. For example, less time, oversight, etc., of a human may be an expected result of implementation of a framework. In various instances, where a human aims to optimize an initialization, a framework may provide one or more options that may be selectable such that the human can more effectively generate initialization values. As explained, such an approach may take into account various aspects of a problem, development aims of an asset, production aims of an asset, etc. As explained, various aspects of a reservoir simulator may also be taken into account, for example, as to memory, compute power (e.g., number of processors, etc.), solvers, preconditioners, etc.

As explained, a workflow may involve model generation and initialization using data from one or more sources, which may include seismic data, well logs, analog sites, etc. As an example, data may be available from drilled wells, which may be drilled using downhole tools, as may be involved in geosteering. In such an example, consider accessing processed data from geosteering operations that may combine downhole log data with surface seismic data to thereby enhance characterization of an environment. As an example, production data and/or other fluid data may be utilized as a source of data.

As an example, a GenAl component may provide for receipt of input and generation of data within a region of interest, which may be physically specified or otherwise specified. For example, consider a GenAl component that may operate based on one or more aspects of a subsurface environment such as a rudimentary model or description of layers, zones, etc. In such an example, the GenAl component may provide for accessing data from one or more sources and using such data in a generative manner. As explained, a machine learning component may utilize one or more machine learning models to estimate values for initialization (e.g., consider capillary pressure and relative permeabilities for various rocks).

As explained, a framework may receive input that directs the framework to one or more particular sets of data in one or more data sources and/or input that can be processed such that the framework may, itself, select and access particular sets of data in one or more data sources. As explained, data may be multidisciplinary where a framework can access and integrate such multidisciplinary data, which otherwise may depend a number of subject matter experts.

As explained, a framework may access well logs (e.g., GR, DENS, NEU, resistivity logs, porosity, Vshale (Vclay), water saturation, etc.), pressure point data (RFT/MDT), and laboratory reports. As explained, a framework may utilize GenAl capabilities to extract relevant information from inputs and/or data and may, for example, provide for data generation (e.g., synthetic data, etc.). As explained, a machine learning model approach may be deployed to estimate values for reservoir simulator initialization. For example, a framework may utilize one or more ML models to estimate capillary pressure and relative permeabilities for one or more of various rock types.

As explained, a reservoir simulator may operate in an iterative manner in an effort to achieve an optimal match of pressure and fluid saturations. As an example, multiple iterations may be required, as fluid density varies with pressure, capillary pressure can reflect the difference between phase pressures, and pressure conditions may be initially unknown.

As an example, a system can be implemented at least in part using a cloud platform. As explained, a system can leverage one or more computational frameworks, which may be accessible or hosted using a framework environment (e.g., DELFI environment, LUMI platform, etc.). As an example, a system may utilize an API structure such as an open API structure to facilitate interactions. As an example, consider an API-based approach to accessing one or more foundation models. As explained, a foundation model may be single or multimodal. As an example, a foundation model may provide for responding to a prompt to access data and/or generate data that may be relevant to a reservoir simulation.

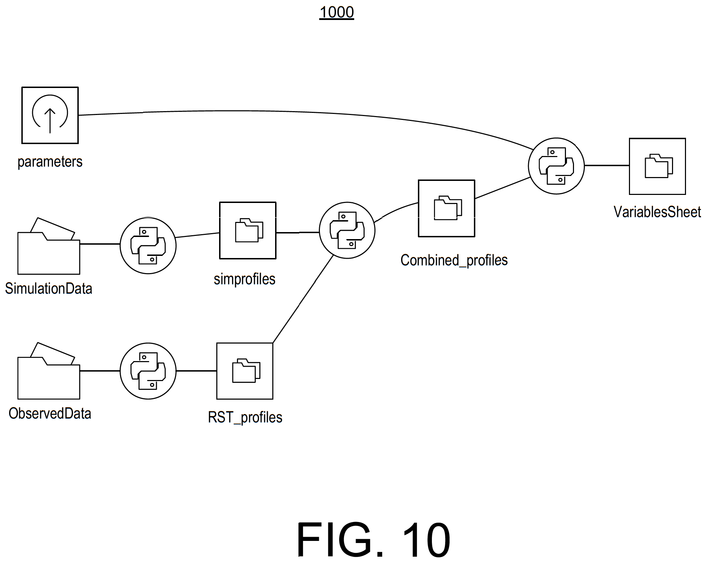

**FIG. 10** shows an example of a workflow 1000 for machine learning to define optimum input for reservoir initialization. As an example, data from a few iterations may be gathered in a storage location (e.g., SimulationData). In such an example, the simulation data may also include a table of initialization parameters (e.g., saturation end points, capillary pressure scaling multipliers, etc.). As an example, measurements acquired from well logs and other well testing operations may include fluid saturations and pressure, which may be accessible via one or more data storage locations (e.g., ObservedData).

As an example, a workflow may provide for processing simulation and observed data and building various machine learning algorithms (e.g., including, but not limited to, Random Forest, Ordinary Least Squares, Ridge (L2) regression, XGBoost, and Decision Tree models) and optimizing to define a best set of initialization parameters that may best reproduce observed initial conditions (e.g., saturations and pressure). As an example, optimum parameter values may be written to a table (e.g., VariableSheet) or other suitable data structure and subsequently used to initialize a reservoir simulator (see, e.g., examples of **FIG. 7** and **FIG. 8****).**

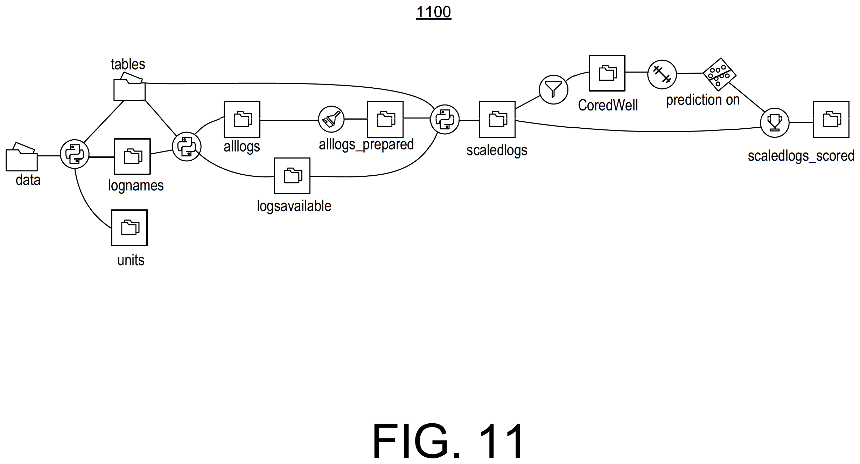

**FIG. 11** shows an example of a workflow 1100 for predicting lithology, for example, in un-cored wells by leveraging detailed core descriptions as training data. As an example, a workflow may commence by importing flat well log files, which may then be parsed to create structured tables suitable for analysis. After structuring the data, a quality control step may be performed to help ensure data integrity, followed by filtering to refine the dataset. One or more of various machine learning models may be considered, for example, for training, testing and evaluation, for example, using curated data to establish predictive performance. As an example, once one or more optimal models are selected, the one or more optimal models may be applied to score and classify lithology in one or more wells, for example, where core data may not be available, which can provide for enabling lithology prediction across one or more regions of a field or, for example, an entire field.

As an example, a reservoir simulation may operate using a spatial model that can be initialized with initial values that may correspond to parameters that depend on different types of rock, different types of fluid, different physical conditions, etc. As example, a spatial model may be characterized using logs, which may be from wells in a field. For example, a coring technique may be utilized to generate well cores as physical samples of rock that may be analyzed where analysis may be performed in the field and/or in a laboratory. In such an example, the analysis may provide for lithology classifications with respect to distance, location, etc. For example, consider rock type versus depth along a well. As explained, various types of data may be available from various sources. As an example, one or more ML models may be built and tested that can provide for prediction of lithology at one or more locations in a field, which may include, for example, a well location. For example, a well may have been drilled without coring such that the well is an un-cored well. Such a well may be lacking in data as to lithology compared to a cored well; however, the un-cored well may have one or more logs (e.g., well log data). As explained, an ML model or ML models may provide for predicting lithology, which may be for an un-cored well or other location in a field. Such predicted lithology may provide for rock typing that may be utilized in combination with other data for purposes of estimating initial values for parameters of a reservoir simulation. As an example, well log data for a well, which may be an un-cored well, may provide for prediction of lithology (e.g., rock type, etc.) using one or more ML models. In such an example, consider one or more types of well logs (e.g., types of well log data) as being assessed as to importance as input in prediction of lithology by one or more ML models.

As an example, a framework may provide for matching available well log data (e.g., as to type) with one or more ML models that may be matched to the available well log data. For example, if one ML model performs exceptionally with one type of well log data while another ML model performs exceptionally with another type of well log data, availability of type(s) of well log data may be used in determining which ML model or ML models to use. In such an example, a framework may dynamically select the most appropriate ML model or ML models to use.

As an example, well logs and pressure measurements along with data from cored wells may be utilized for predicting lithology data, which may provide for rock typing. As an example, data may provide for generation of relevant data using one or more Al and/or ML techniques. As an example, such data may be integrated with lithology (e.g., rock typing, etc.) for initializing a reservoir simulation, which may be initialized or otherwise operating using at least a portion of the well logs and pressure measurement data in a more direct manner. As explained, well logs and pressure measurement data may be utilized for a number of purposes, which may include, for example, rock typing in combination with core data.

As an example, cores from cored wells and/or artificial cores may be subject to analysis, testing, etc., to generate data, equations, relationships, etc. As an example, a GenAl component or components may be utilized to extract (e.g., generate, etc.) data that are relevant to a particular scenario. In such an example, some uncertainty may exist as to lithology for the scenario. To address such uncertainty, a workflow may involve using one or more ML models to predict lithology at one or more locations in a field. In combination, such a workflow may provide for estimating initial parameter values for performing a reservoir simulation where at least a portion of the relevant data and the predicted lithology (e.g., rock typing, etc.) are utilized. As an example of a core test, consider a test that can determine capillary pressure and relative permeability from core-flooding, for example, for one or more types of rock and/or rock conditions (e.g., mixed-wet rocks, etc.). As to another type of test, consider the steady-state transient test (SSTT), which may provide values for capillary pressure and relative permeability.

Capillary pressure and relative phase permeability may be utilized as values, functions, etc., for determining two-phase immiscible flow in natural porous reservoirs. As explained, such values or functions may be input into a reservoir simulator, which may be for one or more of oil and gas production with water, geothermal fields exploitation, geological CO2 storage, and environmental subterranean air-water transport. While accurate laboratory data and/or functions may be helpful, the ability to estimate initial values for a simulation can provide various benefits. As explained, a workflow may aim to tie together lab data and field data for purposes of initialization of a stimulation to be executed by a reservoir simulator. As explained, one or more Al, ML, etc., techniques may be implemented. As explained, GenAl may be utilized for data extraction (e.g., generation, etc.) and one or more ML models may be utilized for predicting lithology and/or one or more other characteristics of a field. In combination, GenAl and one or more predictive ML models may improve reservoir simulation through improved initialization of a simulation, which may be adaptive and/or dynamic. While lithology is mentioned as an example characteristic that may be determined using cores, as explained, various types of logs may be available and may be provided as well log data from a field and/or well log data from one or more other fields and/or labs.

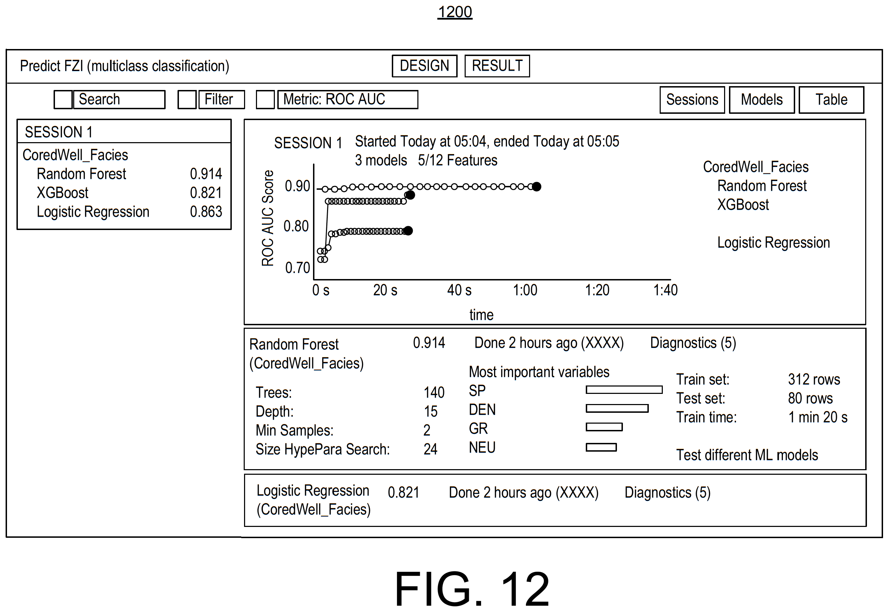

**FIG. 12** shows an example of a graphical user interface (GUI) 1200 for a particular well. As shown, one or more ML models may be selected and utilized (see, e.g., Random Forest, Logistic Regression, and XGBoost). In the GUI 1200, most important variables may be discerned. For example, consider SP, DEN, GR, and NEU.

As shown in the example of **FIG. 12****,** the GUI 1200 can include fields for searching, filtering, metric selection, sessions, models, tables, etc. As an example, a metric, such as, for example, compute Area Under the Receiver Operating Characteristic Curve (ROC AUC) from prediction scores may be selected. Such a metric may be available via a library or other source. For example, consider SCIKIT LEARN library that includes: sklearn.metrics.roc_auc_score(y_true, y_score, *, average='macro', sample_weight=None, max_fpr=None, multi_class='raise', labels=None)[source]. As an example, ranking may be performed, for example, consider use of the Gini Coefficient, which is a summary measure of ranking ability of binary classifiers. It may be expressed using the area under of the ROC as follows: G = 2 * AUC - 1. In such an example, G is the Gini Coefficient and AUC is the ROC-AUC score. Such a normalization may help to ensure that random guessing will yield a score of 0 in expectation, and it is upper bounded by 1.

The ROC curve may be presented as a visual representation of model performance across thresholds. The area under the ROC curve (AUC) represents the probability that the model, if given a randomly chosen positive and negative example, will rank the positive higher than the negative. AUC may be a useful measure for comparing the performance of two different models, as long as the dataset is roughly balanced. For example, a model with greater AUC may generally be the better model.

As shown in the example of **FIG. 12****,** model characteristics may be prepared via one or more graphics, which may include a graphic for ROC AUC score versus time. As shown, the Random Forest model has a higher ROC AUC score than the XGBoost and the Logistic Regression models. In the example of **FIG. 12****,** characteristics may be rendered, such as, for example, trees, depth, etc., which may correspond to a particular model type (e.g., Random Forest, etc.). As shown, the session (Session 1) is for multiclass classification where the Random Forest model performs better than the XGBoost and Logistic Regression models.

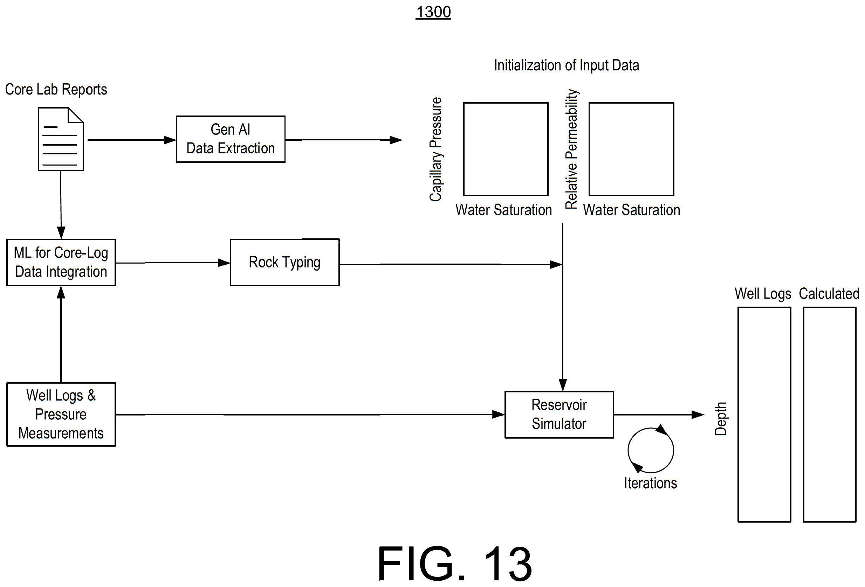

**FIG. 13** shows an example of a workflow 1300 that involves access to core lab reports and access to well logs and pressure measurements, implementation of generative Al (GenAl) for data extraction (e.g., from the core lab reports, etc.), and implementation of machine learning for core-log data integration for rock typing, which may be informed by the well logs and pressure measurements. As shown, the GenAl can provide for initialization of input data such as, for example, capillary pressure versus water saturation and relative permeability versus water saturation, which may be utilized in combination with rock typing from data integration and pressure and/or other values to initialize a reservoir simulator (e.g., INTERSECT, ECLIPSE, etc.) to generate simulation results, which may be generated in an iterative manner and with respect to time (e.g., for a number of time steps). As explained, a reservoir simulator may utilize an iterative solver that performs a number of iterations at each time step. In the example of **FIG. 13****,** the workflow may generate output in the form of computed values that may be compared to other values. For example, consider a comparison of well log values to computed well log values.

As explained, a framework may leverage extensibility of a reservoir simulator, allowing for input of well logs (e.g., GR, DENS, NEU, resistivity logs, porosity, Vshale (Vclay), water saturation, etc.), pressure point data (RFT/MDT), and laboratory reports directly into the simulator. As explained, an algorithm utilizing GenAl capabilities may extract relevant information from inputs. As explained, one or more machine learning models may be deployed to estimate capillary pressure and relative permeabilities for various rock types. As explained, a reservoir simulator may iterate to achieve an optimal match of pressure and fluid saturations. As explained, multiple iterations may be performed, as appropriate, as fluid density varies with pressure, capillary pressure reflects the difference between phase pressures, and pressure conditions may be initially unknown.

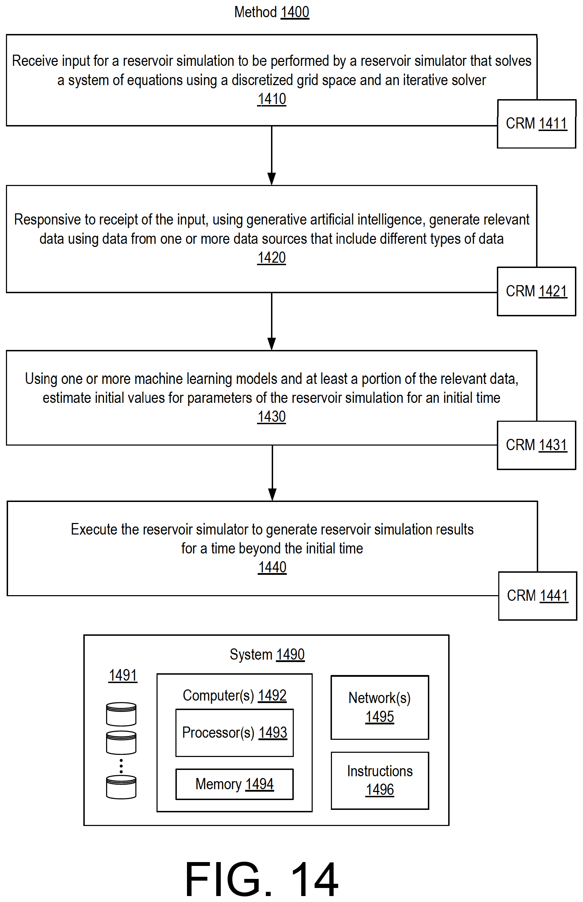

**FIG. 14** shows an example of a method 1400 and an example of a system 1490. In the example of **FIG. 14****,** the method 1400 can include a reception block 1410 for receiving input for a reservoir simulation to be performed by a reservoir simulator that solves a system of equations using a discretized grid space and an iterative solver; a generation block 1420 for, responsive to receipt of the input, using generative artificial intelligence, generating relevant data using data from one or more data sources that include different types of data; an estimation block 1430 for, using one or more machine learning models and at least a portion of the relevant data, estimating initial values for parameters of the reservoir simulation for an initial time; and an execution block 1440 for executing the reservoir simulator to generate reservoir simulation results for a time beyond the initial time.

In the example of **FIG. 14****,** the system 1490 includes one or more information storage devices 1491, one or more computers 1492, one or more networks 1495 and instructions 1496. As to the one or more computers 1492, each computer may include one or more processors (e.g., or processing cores) 1493 and a memory 1494 for storing the instructions 1496, for example, executable by at least one of the one or more processors. As an example, a computer may include one or more network interfaces (e.g., wired or wireless), one or more graphics cards, a display interface (e.g., wired or wireless), etc.

The method 1400 is shown along with various computer-readable media blocks 1411, 1421, 1431, and 1441 (e.g., CRM blocks). Such blocks may be utilized to perform one or more actions of the method 1400. For example, consider the system 1490 of **FIG. 14** and the instructions 1496, which may include instructions of one or more of the CRM blocks 1411, 1421, 1431, and 1441.

As an example, one or more machine learning techniques may be utilized to enhance process operations, a process operations environment, a communications framework, etc. As explained, various types of information can be generated via operations where such information may be utilized for training one or more types of machine learning models to generate one or more trained machine learning models, which may be deployed within one or more frameworks, environments, etc.

As to types of machine learning models, consider one or more of a support vector machine (SVM) model, a k-nearest neighbors (KNN) model, an ensemble classifier model, a neural network (NN) model, etc. As an example, a machine learning model can be a deep learning model (e.g., deep Boltzmann machine, deep belief network, convolutional neural network, stacked auto-encoder, etc.), an ensemble model (e.g., random forest, gradient boosting machine, bootstrapped aggregation, AdaBoost, stacked generalization, gradient boosted regression tree, etc.), a neural network model (e.g., radial basis function network, perceptron, back-propagation, Hopfield network, etc.), a regularization model (e.g., ridge regression, least absolute shrinkage and selection operator, elastic net, least angle regression), a rule system model (e.g., cubist, one rule, zero rule, repeated incremental pruning to produce error reduction), a regression model (e.g., linear regression, ordinary least squares regression, stepwise regression, multivariate adaptive regression splines, locally estimated scatterplot smoothing, logistic regression, etc.), a Bayesian model (e.g., naïve Bayes, average on-dependence estimators, Bayesian belief network, Gaussian naïve Bayes, multinomial naïve Bayes, Bayesian network), a decision tree model (e.g., classification and regression tree, iterative dichotomiser 3, C4.5, C5.0, chi-squared automatic interaction detection, decision stump, conditional decision tree, M5), a dimensionality reduction model (e.g., principal component analysis, partial least squares regression, Sammon mapping, multidimensional scaling, projection pursuit, principal component regression, partial least squares discriminant analysis, mixture discriminant analysis, quadratic discriminant analysis, regularized discriminant analysis, flexible discriminant analysis, linear discriminant analysis, etc.), an instance model (e.g., k-nearest neighbor, learning vector quantization, self-organizing map, locally weighted learning, etc.), a clustering model (e.g., k-means, k-medians, expectation maximization, hierarchical clustering, etc.), etc.

As an example, a machine model may be built using a computational framework with a library, a toolbox, etc., such as, for example, those of the MATLAB framework (MathWorks, Inc., Natick, Massachusetts). The MATLAB framework includes a toolbox that provides supervised and unsupervised machine learning algorithms, including support vector machines (SVMs), boosted and bagged decision trees, k-nearest neighbor (KNN), k-means, k-medoids, hierarchical clustering, Gaussian mixture models, and hidden Markov models. Another MATLAB framework toolbox is the Deep Learning Toolbox (DLT), which provides a framework for designing and implementing deep neural networks with algorithms, pretrained models, and apps. The DLT provides convolutional neural networks (ConvNets, CNNs) and long short-term memory (LSTM) networks to perform classification and regression on image, time-series, and text data. The DLT includes features to build network architectures such as generative adversarial networks (GANs) and Siamese networks using custom training loops, shared weights, and automatic differentiation. The DLT provides for model exchange various other frameworks.

As an example, the TENSORFLOW framework (Google LLC, Mountain View, CA) may be implemented, which is an open-source software library for dataflow programming that includes a symbolic math library, which can be implemented for machine learning applications that can include neural networks. As an example, the CAFFE framework may be implemented, which is a DL framework developed by Berkeley Al Research (BAIR) (University of California, Berkeley, California). As another example, consider the SCIKIT platform (e.g., scikit-learn), which utilizes the PYTHON programming language. As an example, a framework such as the APOLLO Al framework may be utilized (APOLLO.AI GmbH, Germany). As an example, a framework such as the PYTORCH framework may be utilized (Facebook Al Research Lab (FAIR), Facebook, Inc., Menlo Park, California).

As an example, a training method can include various actions that can operate on a dataset to train a ML model. As an example, a dataset can be split into training data and test data where test data can provide for evaluation. A method can include cross-validation of parameters and best parameters, which can be provided for model training.

The TENSORFLOW framework can run on multiple CPUs and GPUs (with optional CUDA (NVIDIA Corp., Santa Clara, California) and SYCL (The Khronos Group Inc., Beaverton, Oregon) extensions for general-purpose computing on graphics processing units (GPUs)). TENSORFLOW is available on 64-bit LINUX, MACOS (Apple Inc., Cupertino, California), WINDOWS (Microsoft Corp., Redmond, Washington), and mobile computing platforms including ANDROID (Google LLC, Mountain View, California) and IOS (Apple Inc.) operating system-based platforms.

TENSORFLOW computations can be expressed as stateful dataflow graphs; noting that the name TENSORFLOW derives from the operations that such neural networks perform on multidimensional data arrays. Such arrays can be referred to as "tensors".

As an example, a device may utilize LiteRT (formerly TENSORFLOW LITE), either of which may be abbreviated as TFL. As an example, a device may utilize another type of lightweight framework, additionally or alternatively. TFL is a set of tools that enables on-device machine learning where models may run on mobile, embedded, and loT devices. TFL is optimized for on-device machine learning, by addressing latency (no round-trip to a server), privacy (no personal data leaves the device), connectivity (Internet connectivity is demanded), size (reduced model and binary size) and power consumption (e.g., efficient inference and a lack of network connections). The TFL framework provides multiple platform support, covering ANDROID and iOS devices, embedded LINUX, and microcontrollers. The TFL framework provides diverse language support, which includes JAVA, SWIFT, Objective-C, C++, and PYTHON. High performance, with hardware acceleration and model optimization. The TFL framework provides for machine learning tasks that may include, for example, image classification, object detection, pose estimation, question answering, text classification, etc., on multiple platforms.

As an example, a dynamic reservoir simulation system can be an autonomous and/or semi-autonomous integrated control system for a field (e.g., an asset) and/or be a part of an autonomous and/or semi-autonomous integrated control system for a field (e.g., operatively coupled to, etc.). Reservoir simulation can include simulation of subsurface and/or surface flows. For example, consider use of one or more types of frameworks such as one or more of the INTERSECT framework and the PIPESIM framework in an integrated control system. As explained, one or more types of frameworks, models, etc., can be implemented within a control system to improve control of one or more field operations, which, in turn, can provide for asset optimization (e.g., optimization of a field that includes one or more reservoirs and one or more wells). As explained, optimization can occur on multiple levels and can be based on field data such that control actions can be output to equipment in an effort to optimize an asset with respect to constraints and objectives.

As an example, a method can include receiving input for a reservoir simulation to be performed by a reservoir simulator that solves a system of equations using a discretized grid space and an iterative solver; responsive to receipt of the input, using generative artificial intelligence, generating relevant data using data from one or more data sources that include different types of data; using one or more machine learning models and at least a portion of the relevant data, estimating initial values for parameters of the reservoir simulation for an initial time; and executing the reservoir simulator to generate reservoir simulation results for a time beyond the initial time. In such an example, the data can include one or more of well log data, pressure point data, and laboratory data.

As an example, generating relevant data can include generating the relevant data for a discretized space grid, for example, where the discretized space grid includes a structural model of a subsurface environment that includes at least one reservoir. As an example, a discretized space grid may represent one or more types of rocks.

As an example, a method can include estimating capillary pressure and/or relative permeability.

As an example, a method may include executing that includes performing a number of iterations for each of a number of time steps to march forward in time from an initial time to a time beyond the initial time. In such an example, the number of iterations can be greater than one for one or more of the number of time steps. In such an example, a method may use estimated initial values to decrease the number of iterations for one or more of the number of times steps by stabilizing operation of the iterative solver.

As an example, input can include one or more specifications of a subsurface environment that includes a reservoir. For example, consider rock layer specifications as to a number of rock layers where, for example, data from one or more data sources can include data for each of the rock layers. As an example, a method can include estimating initial values for each of the rock layers.

As an example, a computational framework may include a generative artificial intelligence component and one or more machine learning models where the computational framework dynamically interacts with a reservoir simulator.

As an example, input may be specified using a graphical user interface generated by a reservoir simulator where the reservoir simulator interacts with one or more generative artificial intelligence components and one or more machine learning models using an application programming interface (API).

As an example, a system can include a processor; a memory accessible to the processor; processor-executable instructions stored in the memory and executable by the processor to instruct the system to: receive input for a reservoir simulation to be performed by a reservoir simulator that solves a system of equations using a discretized grid space and an iterative solver; responsive to receipt of the input, using generative artificial intelligence, generate relevant data using data from one or more data sources that include different types of data; using one or more machine learning models and at least a portion of the relevant data, estimate initial values for parameters of the reservoir simulation for an initial time; and execute the reservoir simulator to generate reservoir simulation results for a time beyond the initial time.

As an example, one or more computer-readable media can include computer-executable instructions executable by a system to instruct the system to: receive input for a reservoir simulation to be performed by a reservoir simulator that solves a system of equations using a discretized grid space and an iterative solver; responsive to receipt of the input, using generative artificial intelligence, generate relevant data using data from one or more data sources that include different types of data; using one or more machine learning models and at least a portion of the relevant data, estimate initial values for parameters of the reservoir simulation for an initial time; and execute the reservoir simulator to generate reservoir simulation results for a time beyond the initial time.

As an example, a computer program product can include one or more computer-readable storage media that can include processor-executable instructions to instruct a computing system to perform one or more methods and/or one or more portions of a method.

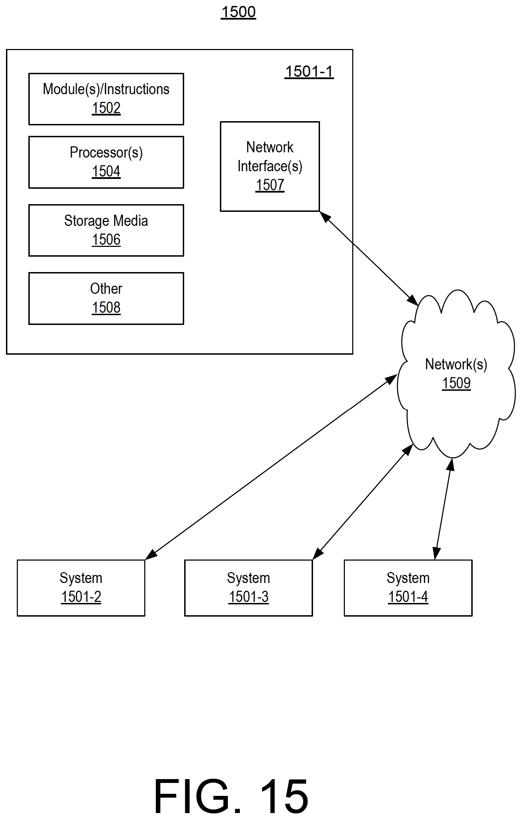

In some embodiments, a method or methods may be executed by a computing system. **FIG. 15** shows an example of a system 1500 that can include one or more computing systems 1501-1, 1501-2, 1501-3 and 1501-4, which may be operatively coupled via one or more networks 1509, which may include wired and/or wireless networks. As shown, the system 1500 may include one or more other components 1508.

As an example, a system can include an individual computer system or an arrangement of distributed computer systems. In the example of **FIG. 15****,** the computer system 1501-1 can include one or more modules 1502, which may be or include processor-executable instructions, for example, executable to perform various tasks (e.g., receiving information, requesting information, processing information, simulation, outputting information, etc.).

As an example, a module may be executed independently, or in coordination with, one or more processors 1504, which is (or are) operatively coupled to one or more storage media 1506 (e.g., via wire, wirelessly, etc.). As an example, one or more of the one or more processors 1504 can be operatively coupled to at least one of one or more network interface 1507. In such an example, the computer system 1501-1 can transmit and/or receive information, for example, via the one or more networks 1509 (e.g., consider one or more of the Internet, a private network, a cellular network, a satellite network, etc.). As shown, one or more other components 1508 can be included.

As an example, the computer system 1501-1 may receive from and/or transmit information to one or more other devices, which may be or include, for example, one or more of the computer systems 1501-2, etc. A device may be located in a physical location that differs from that of the computer system 1501-1. As an example, a location may be, for example, a processing facility location, a data center location (e.g., server farm, etc.), a rig location, a wellsite location, a downhole location, etc.

As an example, a processor may be or include a microprocessor, microcontroller, processor module or subsystem, programmable integrated circuit, programmable gate array, or another control or computing device.

As an example, the storage media 1506 may be implemented as one or more computer-readable or machine-readable storage media. As an example, storage may be distributed within and/or across multiple internal and/or external enclosures of a computing system and/or additional computing systems.

As an example, a storage medium or storage media may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLUERAY disks, or other types of optical storage, or other types of storage devices.

As an example, a storage medium or media may be located in a machine running machine-readable instructions, or located at a remote site from which machine-readable instructions may be downloaded over a network for execution.

As an example, various components of a system such as, for example, a computer system, may be implemented in hardware, software, or a combination of both hardware and software (e.g., including firmware), including one or more signal processing and/or application specific integrated circuits.

As an example, a system may include a processing apparatus that may be or include a general-purpose processors or application specific chips (e.g., or chipsets), such as ASICs, FPGAs, PLDs, or other appropriate devices.

As an example, a device may be a mobile device that includes one or more network interfaces for communication of information. For example, a mobile device may include a wireless network interface (e.g., operable via IEEE 802.11, ETSI GSM, BLUETOOTH, satellite, etc.). As an example, a mobile device may include components such as a main processor, a memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

As an example, information may be input from a display (e.g., consider a touchscreen), output to a display or both. As an example, information may be output to a projector, a laser device, a printer, etc. such that the information may be viewed. As an example, information may be output stereographically or holographically. As to a printer, consider 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. A method comprising:
receiving input for a reservoir simulation to be performed by a reservoir simulator that solves a system of equations using a discretized grid space and an iterative solver;
responsive to receipt of the input, using generative artificial intelligence, generating relevant data using data from one or more data sources that comprise different types of data;
using one or more machine learning models and at least a portion of the relevant data, estimating initial values for parameters of the reservoir simulation for an initial time; and
executing the reservoir simulator to generate reservoir simulation results for a time beyond the initial time.

2. The method of claim 1, wherein the data comprise well log data, pressure point data and/or laboratory data.

3. The method of claim 1 or 2, wherein the generating relevant data comprises generating the relevant data for the discretized space grid.

4. The method of claim 3, wherein the discretized space grid comprises a structural model of a subsurface environment that comprises at least one reservoir and/or wherein the discretized space grid represents one or more types of rocks.

5. The method of any one of the preceding claims, wherein the estimating comprises estimating capillary pressure and/or relative permeability.

6. The method of any one of the preceding claims, wherein the executing comprises performing a number of iterations for each of a number of time steps to march forward in time from the initial time to the time beyond the initial time.

7. The method of claim 6, wherein the number of iterations is greater than one for one or more of the number of time steps.

8. The method of claim 7, wherein use of the estimated initial values decreases the number of iterations for one or more of the number of times steps by stabilizing operation of the iterative solver.

9. The method of any one of the preceding claims, wherein the input comprises one or more specifications of a subsurface environment that comprises a reservoir.

10. The method of claim 9, wherein the one or more specifications comprise rock layer specifications as to a number of rock layers.

11. The method of claim 10, wherein the data from the one or more data sources comprise data for each of the rock layers, wherein the estimating preferably comprises estimating the initial values for each of the rock layers.

12. The method of any one of the preceding claims, wherein a computational framework comprises a generative artificial intelligence component and the one or more machine learning models and wherein the computational framework dynamically interacts with the reservoir simulator.

13. The method of any one of the preceding claims, wherein the input is specified using a graphical user interface generated by the reservoir simulator, and wherein the reservoir simulator interacts with one or more generative artificial intelligence components and the one or more machine learning models using an application programming interface.

14. A system comprising:
a processor;
a memory accessible to the processor;
processor-executable instructions stored in the memory and executable by the processor to instruct the system to perform a method according to any one of the preceding claims.

15. One or more computer-readable media comprising computer-executable instructions executable by a system to instruct the system to perform a method according to any one of the claims 1 - 13.
